# EUROPEAN PATENT APPLICATION

(11) **EP 4 848 864 A1**
(43) Date of publication of application: **02.12.2026**
(21) Application number: 25751239.2
(22) Date of filing: 22.01.2025
(51) Int. Cl.: H04W 72/231

(54) **COMMUNICATION METHOD AND APPARATUS**

(30) Priority: 08.02.2024 CN 202410178316
(71) Applicant: HUAWEI TECHNOLOGIES CO., LTD., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); SONG, Xinghua, Shenzhen, Guangdong 518129 (CN); LU, Shaozhong, Shenzhen, Guangdong 518129 (CN); HAN, Chengcheng, Shenzhen, Guangdong 518129 (CN)
(74) Representative: Huawei European IPR
(86) International application number: PCT/CN2025/073915
(87) International publication number: WO 2025/167637

(57) **Abstract**

A communication method and apparatus are provided, to configure a time domain resource and/or a frequency domain resource of an SBFD subband, thereby improving flexibility of SBFD configuration information. The method includes: A terminal device receives the SBFD configuration information from a network device, where the SBFD configuration information is used to configure the time domain resource and/or the frequency domain resource of the SBFD subband; and further, the terminal device determines, based on first information, that the SBFD configuration information takes effect, where the first information indicates that the SBFD configuration information takes effect. According to the method, after the network device configures the time domain resource and/or the frequency domain resource of the SBFD subband for the terminal device, the terminal device determines an effective occasion based on the first information, so that taking effect of the time domain resource and/or the frequency domain resource of the SBFD subband can be flexibly controlled in various scenarios, thereby improving the flexibility of the SBFD configuration information.

## Description

### CROSS-REFERENCE TO RELATED APPLICATIONS

This application claims priority to Chinese Patent Application No. 202410178316.3, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5G new radio (new radio, NR) wireless communication system is deployed in medium and high frequency bands, and achieves a high data rate and a low delay by using a large bandwidth. In a time division duplexing (time division duplexing, TDD) system, a downlink (downlink, DL) usually occupies main time resources. This causes coverage imbalance between the DL and an uplink (uplink, UL), resulting in a poor uplink coverage in the TDD system and a high delay. To resolve uplink coverage and delay problems in the TDD system, a subband full duplex (subband full duplex, SBFD) solution is proposed in the standard protocol R18. In the SBFD solution, one carrier may be divided into a plurality of subbands, and transmission directions of different subbands may be different. In the SBFD solution, available uplink transmission resources of a terminal device increase, so that an uplink coverage can be effectively improved, and an uplink delay can be reduced.

When the SBFD solution is used, a time domain resource and a frequency domain resource of an SBFD subband need to be configured. However, currently, there is no clear method for configuring the time domain resource and frequency domain resource of the SBFD subband.

### SUMMARY

Embodiments of this application provide a communication method and apparatus, to configure a time domain resource and/or a frequency domain resource of an SBFD subband, thereby improving flexibility of SBFD configuration information.

According to a first aspect, this application provides a communication method. The method may be applied to a terminal device, or a processor, a chip, a chip system, a functional module, or the like in the terminal device. The method may include: receiving SBFD configuration information from a network device, where the SBFD configuration information is used to configure a time domain resource and/or a frequency domain resource of an SBFD subband; and determining, based on first information, that the SBFD configuration information takes effect, where the first information indicates that the SBFD configuration information takes effect.

According to the method, after the network device configures the time domain resource and/or the frequency domain resource of the SBFD subband for the terminal device, the terminal device determines an effective occasion based on the first information, so that taking effect of the time domain resource and/or the frequency domain resource of the SBFD subband can be flexibly controlled in various scenarios, thereby improving flexibility of the SBFD configuration information.

In a possible design, the SBFD configuration information from the network device may be received in the following method: receiving a system information block (system information block, SIB) from the network device, where the SIB includes the SBFD configuration information. The SBFD configuration information is transmitted via the SIB, so that signaling overheads can be reduced.

In a possible design, the SBFD configuration information may include frequency domain resources of at least one group of SBFD subbands, frequency domain resources of each group of SBFD subbands in the frequency domain resources of the at least one group of SBFD subbands correspond to one subcarrier spacing SCS, a first group of SBFD subbands includes a plurality of subbands, and the first group of SBFD subbands is any group of SBFD subbands in the at least one group of SBFD subbands. In this way, frequency domain resources of SBFD subbands that match various SCSs can be configured, to improve SBFD compatibility and flexibility.

In a possible design, a frequency domain resource of any subband included in the first group of SBFD subbands is included in a first carrier, the first carrier corresponds to the first group of SBFD subbands, and an SCS corresponding to frequency domain resources of the first group of SBFD subbands is the same as an SCS corresponding to the first carrier. In this way, it can be ensured that resource alignment is implemented between edges of the SBFD subband and the corresponding carrier.

In a possible design, a valid resource is determined based on an active bandwidth part BWP and frequency domain resources of a second group of SBFD subbands, where an SCS corresponding to the frequency domain resources of the second group of SBFD subbands is the same as an SCS of the active BWP, and the second group of SBFD subbands is one group of SBFD subbands in the at least one group of SBFD subbands. In this way, an effective resource used for data transmission can be accurately determined, to improve accuracy of data transmission.

In a possible design, the SBFD configuration information includes first indication information, the first indication information indicates a slot position of the SBFD subband in a first time domain pattern, and the first time domain pattern corresponds to a first period length. Based on this, the slot position of the SBFD subband in the first time domain pattern may be determined, to determine the time domain resource of the SBFD subband.

In a possible design, that the first indication information indicates the slot position of the SBFD subband in the first time domain pattern includes: The first indication information indicates a start slot and a quantity of first consecutive slots of the SBFD subband in the first time domain pattern; the first indication information indicates an end slot and a quantity of second consecutive slots of the SBFD subband in the first time domain pattern; or the first indication information indicates a start slot and an end slot of the SBFD subband in the first time domain pattern. Based on this method, the first indication information may indicate the slot position of the SBFD subband in the first time domain pattern in a plurality of manners, thereby improving indication flexibility.

In a possible design, the SBFD configuration information further includes second indication information, and the second indication information indicates a symbol position of the SBFD subband in a slot in the first time domain pattern. In this way, the symbol position of the SBFD subband in the slot in the first time domain pattern can be further determined, thereby improving accuracy of determining the time domain resource of the SBFD subband.

In a possible design, that the second indication information indicates the symbol position of the SBFD subband in the slot in the first time domain pattern includes: The second indication information indicates a start symbol in the start slot of the SBFD subband in the first time domain pattern, or last M consecutive symbols in the start slot in the first time domain pattern, where M is a positive integer; and/or the second indication information indicates an end symbol in the end slot of the SBFD subband in the first time domain pattern, or first N consecutive symbols in the end slot in the first time domain pattern, where N is a positive integer. Based on this method, the second indication information may indicate the symbol position of the SBFD subband in the slot in the first time domain pattern in a plurality of manners, thereby improving indication flexibility.

In a possible design, the SBFD configuration information may further include third indication information, the third indication information indicates a slot position of the SBFD subband in a second time domain pattern, and the second time domain pattern corresponds to a second period length. Based on this, the slot position of the SBFD subband in the second time domain pattern may be determined, to determine the time domain resource of the SBFD subband.

In a possible design, that the third indication information indicates the slot position of the SBFD subband in the second time domain pattern includes: The third indication information indicates a start slot and a quantity of third consecutive slots of the SBFD subband in the second time domain pattern; the third indication information indicates an end slot and a quantity of fourth consecutive slots of the SBFD subband in the second time domain pattern; or the third indication information indicates a start slot and an end slot of the SBFD subband in the second time domain pattern. Based on this method, the third indication information may indicate the slot position of the SBFD subband in the second time domain pattern in a plurality of manners, thereby improving indication flexibility.

In a possible design, the SBFD configuration information further includes fourth indication information, and the fourth indication information indicates a symbol position of the SBFD subband in a slot in the second time domain pattern. In this way, the symbol position of the SBFD subband in the slot in the second time domain pattern can be further determined, thereby improving accuracy of determining the time domain resource of the SBFD subband.

In a possible design, that the fourth indication information indicates the symbol position of the SBFD subband in the slot in the second time domain pattern includes: The fourth indication information indicates a start symbol in the start slot of the SBFD subband in the second time domain pattern, or last P consecutive symbols in the start slot in the second time domain pattern, where P is a positive integer; and/or the fourth indication information indicates an end symbol in the end slot of the SBFD subband in the second time domain pattern, or first K consecutive symbols in the end slot in the second time domain pattern, where K is a positive integer. Based on this method, the fourth indication information may indicate the symbol position of the SBFD subband in the slot in the second time domain pattern in a plurality of manners, thereby improving indication flexibility.

In a possible design, the time domain resource of the SBFD subband corresponds to a reference SCS associated with a cell-specific uplink-downlink TDD configuration. In this way, the time domain resource of the SBFD subband can be compatible with the time domain resource of TDD.

In a possible design, the reference SCS is used to determine a time domain boundary of the SBFD subband.

In a possible design, a first RRC message is received from the network device, where the first RRC message includes the first information. Based on the method, after the terminal device enters an RRC connected state, the network device may explicitly indicate that the SBFD configuration information takes effect, so that accuracy of taking effect of the SBFD configuration information can be improved, and a contention between that the SBFD configuration information takes effect and that the terminal device cannot use the SBFD configuration information in a random access process can be resolved.

In a possible design, the first information includes a predefined first rule, and the first rule includes: determining that the SBFD configuration information takes effect based on an RRC setup message, an RRC resume message, or an RRC reestablishment message from the network device; determining that the SBFD configuration information takes effect based on a random access message 1; determining that the SBFD configuration information takes effect based on a random access message 3; or determining that the SBFD configuration information takes effect based on a random access message A. It is determined, based on a predefined rule that the SBFD configuration information takes effect, so that indication signaling overheads can be reduced, and the SBFD configuration information can be determined to take effect when the terminal device can support the SBFD. In this case, the contention can be avoided, and flexibility is good.

In a possible design, first capability information is sent to the network device, where the first capability information indicates that a terminal device supports SBFD. In this way, the network device can clearly determine whether the terminal device supports the SBFD, to indicate or determine, at an appropriate occasion, that the SBFD configuration information takes effect.

In a possible design, a random access preamble is sent by using a physical random access channel resource on a non-SBFD symbol.

In a possible design, a random access preamble is sent by using a physical random access channel resource on an SBFD symbol.

In a possible design, there may be a switching (transition) time between an SBFD slot (or symbol) and a non-SBFD slot (or symbol). In this way, this can be consistent with a scenario in which hardware or software of the network device or the terminal device, such as an antenna or a filter, is implemented differently in two types of slots (or symbols), or consider a scenario of uplink time synchronization.

In a possible design, in a downlink slot (or symbol) or a flexible slot (or symbol), a priority of the SBFD configuration information is higher than that of cell-specific TDD uplink-downlink configuration information. In this way, a coverage of the SBFD subband can be improved, thereby improving an uplink coverage.

In a possible design, for a slot (or symbol) that is indicated as a downlink slot or an uplink slot by the cell-specific TDD uplink-downlink configuration information and is not configured with an SBFD subband by the SBFD configuration information, terminal device-specific TDD uplink-downlink configuration information maintains the slot (or symbol) as a downlink slot or an uplink slot.

In a possible design, for a slot (or symbol) that is indicated as a flexible slot by the cell-specific TDD uplink-downlink configuration information and is not configured with an SBFD subband by the SBFD configuration information, the terminal device-specific TDD uplink-downlink configuration information may rewrite or reset the slot (or symbol) to a downlink slot or an uplink slot (or symbol), or still maintain the slot (or symbol) as a flexible slot (or symbol).

In a possible design, for a slot (or symbol), indicated as a downlink slot or an uplink slot by the cell-specific TDD uplink-downlink configuration information, that is configured with an SBFD subband by the SBFD configuration information, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband. In this way, a coverage of the SBFD subband can be ensured, thereby improving an uplink coverage.

In a possible design, for a slot (or symbol), indicated as a flexible slot by the cell-specific TDD uplink-downlink configuration information, that is configured with an SBFD subband by the SBFD configuration information, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband. In this way, a coverage of the SBFD subband can be ensured, thereby improving an uplink coverage.

In a possible design, for a slot (or symbol), indicated as a downlink slot or an uplink slot by the cell-specific TDD uplink-downlink configuration information, that is configured with an SBFD subband by the SBFD configuration information, the terminal device-specific TDD uplink-downlink configuration information may rewrite or reset the slot (or symbol) to a downlink slot or an uplink slot (or symbol) that is not configured with an SBFD subband, in other words, the terminal device-specific TDD uplink-downlink configuration information may disable the configuration of the SBFD subband.

In a possible design, for a slot (or symbol), indicated as a flexible slot by the cell-specific TDD uplink-downlink configuration information, that is configured with an SBFD subband by the SBFD configuration information, the terminal device-specific TDD uplink-downlink configuration information may rewrite or reset the slot (or symbol) to a downlink slot, an uplink slot, or a flexible slot (or symbol) that is not configured with an SBFD subband, in other words, the terminal device-specific TDD uplink-downlink configuration information may disable the configuration of the SBFD subband.

In a possible design, for a slot (or symbol) that is indicated as a downlink slot or an uplink slot by the cell-specific TDD uplink-downlink configuration information and is not configured with an SBFD subband by the SBFD configuration information, the terminal device-specific TDD uplink-downlink configuration information may configure an SBFD subband for the slot (or symbol), in other words, the terminal device-specific TDD uplink-downlink configuration information configures the slot (or symbol) as an SBFD slot (or symbol).

In a possible design, for a slot (or symbol) that is indicated as a flexible slot by the cell-specific TDD uplink-downlink configuration information and is not configured with an SBFD subband by the SBFD configuration information, the terminal device-specific TDD uplink-downlink configuration information may configure an SBFD subband for the slot (or symbol), in other words, the terminal device-specific TDD uplink-downlink configuration information configures the slot (or symbol) as an SBFD slot (or symbol).

According to a second aspect, this application provides a communication method. The method may be applied to a network device, or a processor, a chip, a chip system, a functional module, or the like in the network device. The method may include: sending SBFD configuration information to a terminal device, where the SBFD configuration information is used to configure a time domain resource and/or a frequency domain resource of an SBFD subband; and sending first information to the terminal device, where the first information indicates that the SBFD configuration information takes effect.

According to the method, after the network device configures the time domain resource and/or the frequency domain resource of the SBFD subband for the terminal device, the network device indicates, via the first information, to the terminal device that the SBFD configuration information takes effect, so that taking effect of the time domain resource and/or the frequency domain resource of the SBFD subband can be flexibly controlled in various scenarios, thereby improving flexibility of the SBFD configuration information.

In a possible design, the SBFD configuration information may be sent to the terminal device in the following method: sending a SIB to the terminal device, where the SIB includes the SBFD configuration information. The SBFD configuration information is transmitted via the SIB, so that signaling overheads can be reduced.

In a possible design, the SBFD configuration information includes frequency domain resources of at least one group of SBFD subbands, frequency domain resources of each group of SBFD subbands in the frequency domain resources of the at least one group of SBFD subbands correspond to one subcarrier spacing SCS, a first group of SBFD subbands includes a plurality of subbands, and the first group of SBFD subbands is any group of SBFD subbands in the at least one group of SBFD subbands. In this way, frequency domain resources of SBFD subbands that match various SCSs can be configured, to improve SBFD compatibility and flexibility.

In a possible design, a frequency domain resource of any subband included in the first group of SBFD subbands is included in a first carrier, the first carrier corresponds to the first group of SBFD subbands, and an SCS corresponding to frequency domain resources of the first group of SBFD subbands is the same as an SCS corresponding to the first carrier. In this way, it can be ensured that resource alignment is implemented between edges of the SBFD subband and the corresponding carrier.

In a possible design, the SBFD configuration information includes first indication information, the first indication information indicates a slot position of the SBFD subband in a first time domain pattern, and the first time domain pattern corresponds to a first period length. Based on this, the slot position of the SBFD subband in the first time domain pattern may be determined, to determine the time domain resource of the SBFD subband.

In a possible design, that the first indication information indicates the slot position of the SBFD subband in the first time domain pattern includes: The first indication information indicates a start slot and a quantity of first consecutive slots of the SBFD subband in the first time domain pattern; the first indication information indicates an end slot and a quantity of second consecutive slots of the SBFD subband in the first time domain pattern; or the first indication information indicates a start slot and an end slot of the SBFD subband in the first time domain pattern. Based on this method, the first indication information may indicate the slot position of the SBFD subband in the first time domain pattern in a plurality of manners, thereby improving indication flexibility.

In a possible design, the SBFD configuration information further includes second indication information, and the second indication information indicates a symbol position of the SBFD subband in a slot in the first time domain pattern. In this way, the symbol position of the SBFD subband in the slot in the first time domain pattern can be further determined, thereby improving accuracy of determining the time domain resource of the SBFD subband.

In a possible design, that the second indication information indicates the symbol position of the SBFD subband in the slot in the first time domain pattern includes: The second indication information indicates a start symbol in the start slot of the SBFD subband in the first time domain pattern, or last M consecutive symbols in the start slot in the first time domain pattern, where M is a positive integer; and/or the second indication information indicates an end symbol in the end slot of the SBFD subband in the first time domain pattern, or first N consecutive symbols in a start symbol in the end slot in the first time domain pattern, where N is a positive integer. Based on this method, the second indication information may indicate the symbol position of the SBFD subband in the slot in the first time domain pattern in a plurality of manners, thereby improving indication flexibility.

In a possible design, the SBFD configuration information further includes third indication information, the third indication information indicates a slot position of the SBFD subband in a second time domain pattern, and the second time domain pattern corresponds to a second period length. Based on this, the slot position of the SBFD subband in the second time domain pattern may be determined, to determine the time domain resource of the SBFD subband.

In a possible design, that the third indication information indicates the slot position of the SBFD subband in the second time domain pattern includes: The third indication information indicates a start slot and a quantity of third consecutive slots of the SBFD subband in the second time domain pattern; the third indication information indicates an end slot and a quantity of fourth consecutive slots of the SBFD subband in the second time domain pattern; or the third indication information indicates a start slot and an end slot of the SBFD subband in the second time domain pattern. Based on this method, the third indication information may indicate the slot position of the SBFD subband in the second time domain pattern in a plurality of manners, thereby improving indication flexibility.

In a possible design, the SBFD configuration information further includes fourth indication information, and the fourth indication information indicates a symbol position of the SBFD subband in a slot in the second time domain pattern. In this way, the symbol position of the SBFD subband in the slot in the second time domain pattern can be further determined, thereby improving accuracy of determining the time domain resource of the SBFD subband.

In a possible design, that the fourth indication information indicates the symbol position of the SBFD subband in the slot in the second time domain pattern includes: The fourth indication information indicates a start symbol in the start slot of the SBFD subband in the second time domain pattern, or last P consecutive symbols in the start slot in the second time domain pattern, where P is a positive integer; and/or the fourth indication information indicates an end symbol in the end slot of the SBFD subband in the second time domain pattern, or first K consecutive symbols in a start symbol in the end slot in the second time domain pattern, where K is a positive integer. Based on this method, the fourth indication information may indicate the symbol position of the SBFD subband in the slot in the second time domain pattern in a plurality of manners, thereby improving indication flexibility.

In a possible design, the time domain resource of the SBFD subband corresponds to a reference SCS associated with a cell-specific uplink-downlink TDD configuration. In this way, the time domain resource of the SBFD subband can be compatible with the time domain resource of TDD.

In a possible design, the reference SCS is used to determine a time domain boundary of the SBFD subband.

In a possible design, the first information may be sent to the terminal device in the following manner: sending a first RRC message to the terminal device, where the first RRC message includes the first information. Based on the method, after the terminal device enters an RRC connected state, the network device may explicitly indicate that the SBFD configuration information takes effect, so that accuracy of taking effect of the SBFD configuration information can be improved, and a contention between that the SBFD configuration information takes effect and that the terminal device cannot use the SBFD configuration information in a random access process can be reduced.

In a possible design, first capability information is received from the terminal device, where the first capability information indicates that the terminal device supports SBFD. In this way, the network device can clearly determine whether the terminal device supports the SBFD, to indicate, at an appropriate occasion, that the SBFD configuration information takes effect.

In a possible design, a random access preamble is sent by using a physical random access channel resource on a non-SBFD symbol.

In a possible design, a random access preamble is sent by using a physical random access channel resource on an SBFD symbol.

In a possible design, there may be a switching (transition) time between an SBFD slot (or symbol) and a non-SBFD slot (or symbol). In this way, this can be consistent with a scenario in which hardware or software of the network device or the terminal device, such as an antenna or a filter, is implemented differently in two types of slots (or symbols), or consider a scenario of uplink time synchronization.

In a possible design, in a downlink slot (or symbol) or a flexible slot (or symbol), a priority of the SBFD configuration information is higher than that of cell-specific TDD uplink-downlink configuration information. In this way, a coverage of the SBFD subband can be improved, thereby improving an uplink coverage.

In a possible design, for a slot (or symbol) that is indicated as a downlink slot or an uplink slot by the cell-specific TDD uplink-downlink configuration information and is not configured with an SBFD subband by the SBFD configuration information, terminal device-specific TDD uplink-downlink configuration information maintains the slot (or symbol) as a downlink slot or an uplink slot.

In a possible design, for a slot (or symbol) that is indicated as a flexible slot by the cell-specific TDD uplink-downlink configuration information and is not configured with an SBFD subband by the SBFD configuration information, the terminal device-specific TDD uplink-downlink configuration information may rewrite or reset the slot (or symbol) to a downlink slot or an uplink slot (or symbol), or still maintain the slot (or symbol) as a flexible slot (or symbol).

In a possible design, for a slot (or symbol), indicated as a downlink slot or an uplink slot by the cell-specific TDD uplink-downlink configuration information, that is configured with an SBFD subband by the SBFD configuration information, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband. In this way, a coverage of the SBFD subband can be ensured, thereby improving an uplink coverage.

In a possible design, for a slot (or symbol), indicated as a flexible slot by the cell-specific TDD uplink-downlink configuration information, that is configured with an SBFD subband by the SBFD configuration information, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband. In this way, a coverage of the SBFD subband can be ensured, thereby improving an uplink coverage.

In a possible design, for a slot (or symbol), indicated as a downlink slot or an uplink slot by the cell-specific TDD uplink-downlink configuration information, that is configured with an SBFD subband by the SBFD configuration information, the terminal device-specific TDD uplink-downlink configuration information may rewrite or reset the slot (or symbol) to a downlink slot or an uplink slot (or symbol) that is not configured with an SBFD subband, in other words, the terminal device-specific TDD uplink-downlink configuration information may disable the configuration of the SBFD subband.

In a possible design, for a slot (or symbol), indicated as a flexible slot by the cell-specific TDD uplink-downlink configuration information, that is configured with an SBFD subband by the SBFD configuration information, the terminal device-specific TDD uplink-downlink configuration information may rewrite or reset the slot (or symbol) to a downlink slot, an uplink slot, or a flexible slot (or symbol) that is not configured with an SBFD subband, in other words, the terminal device-specific TDD uplink-downlink configuration information may disable the configuration of the SBFD subband.

In a possible design, for a slot (or symbol) that is indicated as a downlink slot or an uplink slot by the cell-specific TDD uplink-downlink configuration information and is not configured with an SBFD subband by the SBFD configuration information, the terminal device-specific TDD uplink-downlink configuration information may configure an SBFD subband for the slot (or symbol), in other words, the terminal device-specific TDD uplink-downlink configuration information configures the slot (or symbol) as an SBFD slot (or symbol).

In a possible design, for a slot (or symbol) that is indicated as a flexible slot by the cell-specific TDD uplink-downlink configuration information and is not configured with an SBFD subband by the SBFD configuration information, the terminal device-specific TDD uplink-downlink configuration information may configure an SBFD subband for the slot (or symbol), in other words, the terminal device-specific TDD uplink-downlink configuration information configures the slot (or symbol) as an SBFD slot (or symbol).

According to a third aspect, this application further provides a communication apparatus. The communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a processing unit, and optionally may further include a transceiver unit. These units may perform functions of the method in the first aspect or the possible design examples of the first aspect. Details are not described herein again.

In a possible design, the structure of the communication apparatus includes one or more processors, and optionally further includes a memory and/or a transceiver. The transceiver is configured to: receive and send data, a message, information, or the like, and is configured to communicate and interact with another device in a system. The processor is configured to support the communications apparatus in performing a corresponding function in the first aspect or the possible design examples of the first aspect. The memory is coupled to the processor, and stores program instructions and data necessary for the communication apparatus.

According to a fourth aspect, this application further provides a communication apparatus. The communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a processing unit, and optionally may further include a transceiver unit. These units may perform functions of the method in the second aspect or the possible design examples of the second aspect. Details are not described herein again.

In a possible design, the structure of the communication apparatus includes one or more processors, and optionally further includes a memory and/or a transceiver. The transceiver is configured to: receive and send data, a message, information, or the like, and is configured to communicate and interact with another device in a system. The processor is configured to support the communications apparatus in performing a corresponding function in the second aspect or the possible design examples of the second aspect. The memory is coupled to the processor, and stores program instructions and data necessary for the communication apparatus.

According to a fifth aspect, an embodiment of this application provides a communication system. The communication system may include a terminal device and/or a network device. The terminal device is configured to implement the method in the first aspect or the possible design examples of the first aspect. The network device is configured to implement the method in the second aspect or the possible design examples of the second aspect.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any usable medium that can be accessed by the computer. By way of example and not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be configured to carry or store desired program code in a form of instructions or a data structure and that is accessible to the computer.

According to a seventh aspect, an embodiment of this application provides a computer program product, including instructions. When the instructions are run on a computer, the method in the first aspect or any possible design of the first aspect, or the method in the second aspect or any possible design of the second aspect is performed.

According to an eighth aspect, this application further provides a chip or a chip system, including one or more processors. The processor is coupled to at least one memory, and is configured to: read and execute program instructions stored in the memory, so that the chip or the chip system implements the method in the first aspect or any possible design of the first aspect, or the method in the second aspect or any possible design of the second aspect.

For each of the third aspect to the eighth aspect and technical effects that can be achieved in the aspect, refer to the foregoing descriptions of the technical effects that can be achieved in the first aspect, the possible solutions in the first aspect, the second aspect, or the possible solutions in the second aspect. Details are not described herein again.

### BRIEF DESCRIPTION OF DRAWINGS

FIG. 1 is a diagram of an architecture of a communication system according to this application;
FIG. 2 is a diagram of a connection relationship between a network device and a terminal device according to this application;
FIG. 3 is a diagram of a DL and a UL in a TDD system according to this application;
FIG. 4 is a diagram of an SBFD solution according to this application;
FIG. 5 is a diagram of another SBFD solution according to this application;
FIG. 6 is a flowchart of a random access process according to this application;
FIG. 7 is a flowchart of another random access process according to this application;
FIG. 8 is a flowchart of a communication method according to this application;
FIG. 9A and FIG. 9B are diagrams illustrating that frequency domain resources of two groups of SBFD subbands separately correspond to one SCS according to this application;
FIG. 10 is a diagram of a first time domain pattern according to this application;
FIG. 11 is a diagram of a first time domain pattern and a second time domain pattern according to this application;
FIG. 12 is a diagram of a structure of a communication apparatus according to this application; and
FIG. 13 is a diagram of a structure of a communication apparatus according to this application.

### DESCRIPTION OF EMBODIMENTS

Embodiments of this application provide a communication method and apparatus, to configure a time domain resource and/or a frequency domain resource of an SBFD subband, thereby improving flexibility of SBFD configuration information. The method and the apparatus in this application are based on a same technical concept. Because problem-resolving principles of the method and the apparatus are similar, mutual reference may be made to implementation of the apparatus and the method, and repeated parts are not described.

In descriptions of this application, words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the descriptions of this application, "and/or" describes an association relationship between associated objects, and indicates that three relationships may exist. For example, A and/or B may represent the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a fourth generation (4th generation, 4G) mobile communication system (for example, a long term evolution (long term evolution, LTE) system), a fifth generation (5th generation, 5G) mobile communication system (for example, a new radio (new radio, NR) system), and a future evolved communication system (for example, a sixth generation (6th generation, 6G) mobile communication system).

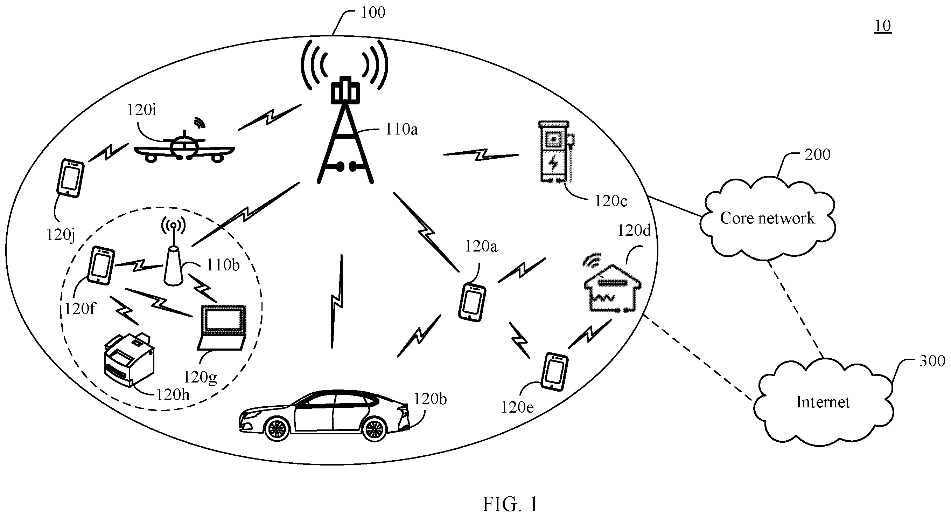

For example, FIG. 1 is a diagram of a possible architecture of a communication system to which an embodiment of this application is applicable. As shown in FIG. 1, a communication system 10 may include a radio access network (radio access network, RAN) 100 and a core network (core network, CN) 200. Optionally, the communication system 10 may further include an internet 300.

The RAN 100 includes at least one RAN node (for example, 110a and 110b in FIG. 1, collectively referred to as 110) and at least one terminal device (for example, 120a to 120j in FIG. 1, collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates the foregoing two or more systems.

The RAN node 110 sometimes may also be referred to as a RAN entity, an access node, or the like, and forms a part of the communication system, to help a terminal device implement radio access. A plurality of RAN nodes 110 in the communication system 10 may be nodes of a same type, or may be nodes of different types. In some scenarios, roles of the RAN node 110 and the terminal device 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal device. Both the RAN node 110 and the terminal device 120 are sometimes referred to as communication apparatuses. For example, in FIG. 1, the network elements 110a and 110b may be understood as communication apparatuses having base station functions, and the network elements 120a to 120j may be understood as communication apparatuses having terminal device functions.

The RAN node may also be expressed differently, for example, a network device. In this application, unless otherwise specified, the network device is used for description below.

In a possible scenario, the network device may also be referred to as an access network device, and the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented by using a software function running on hardware, or may be implemented by using an instantiated virtualization function on a platform (for example, a cloud platform). The access network device in this application may alternatively be a logical node, a logical module, or software that can implement all or the part of the functions of the access network device.

In another possible scenario, a plurality of access network devices coordinate to assist the terminal device in implementing radio access, and different access network devices each implement a part of functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented by using a software module, a hardware module, or a combination of a software module and a hardware module.

The terminal device may also be referred to as user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), Internet of things (internet of things, IoT), virtual reality, augmented reality, industrial control, autonomous driving, remote medical, smart grid, smart furniture, smart office, smart wearable, smart transportation, and smart city. For example, the terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal device is not limited in embodiments of this application.

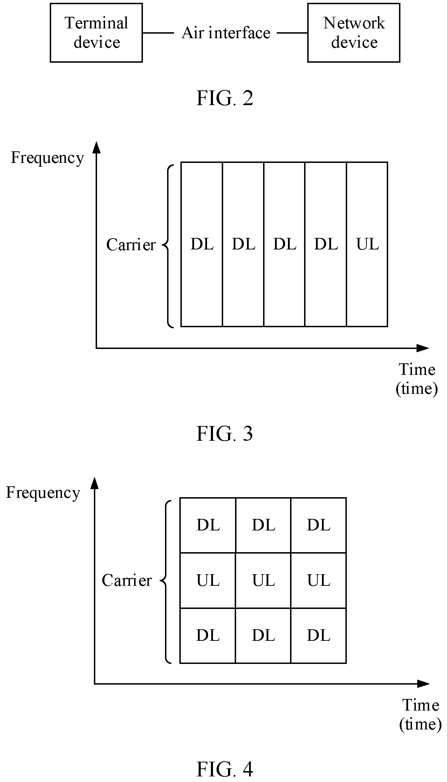

For example, the network device and the terminal device may be connected through an air interface. For example, a connection relationship between the network device and the terminal device may be shown in FIG. 2.

The communication system described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The following first explains and describes related terms or technologies in embodiments of this application. It should be noted that these explanations are intended to make embodiments of this application easier to understand, but should not be considered as limitations on the protection scope claimed in this application.

### (1) Subband full duplex (subband full duplex, SBFD)

As shown in FIG. 3, in a time division duplexing (time division duplexing, TDD) system, a downlink (downlink, DL) usually occupies main time resources. This causes coverage imbalance between the DL and an uplink (uplink, UL). Compared with a frequency division duplexing (frequency division duplexing, FDD) system, the TDD system has a poorer uplink coverage and a higher delay. To resolve uplink coverage and delay problems in the TDD system, an SBFD solution is proposed in the R18.

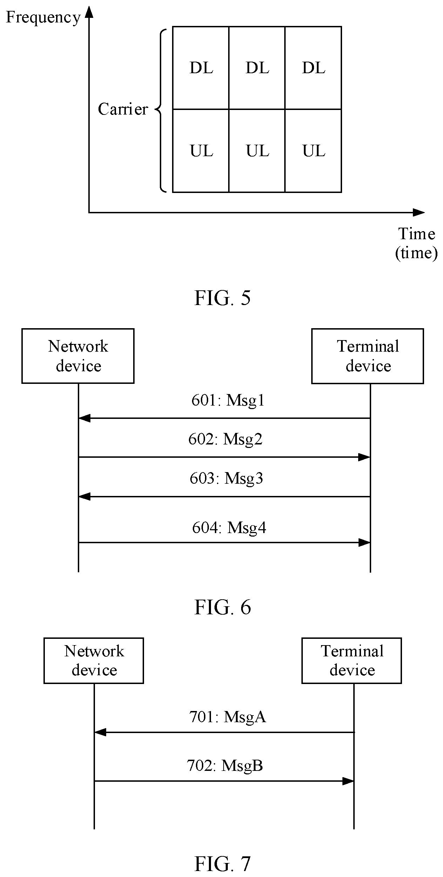

In the SBFD solution, one carrier may be divided into a plurality of subbands, and transmission directions of different subbands may be different. For example, an SBFD solution may be shown in FIG. 4. One carrier is divided into three subbands, where a middle subband is an uplink subband (used for uplink transmission), and an upper subband and a lower subband are downlink subbands (used for downlink transmission). For another example, another SBFD solution may be shown in FIG. 5. One carrier is divided into two subbands, where an upper subband is a downlink subband (used for downlink transmission), and a lower subband is an uplink subband (used for uplink transmission). It may be considered that, in the SBFD solution, the network device may simultaneously perform sending on the downlink subband and receiving on the uplink subband on an SBFD symbol. In the SBFD solution, uplink transmission resources available to the terminal device increase, so that an uplink coverage can be effectively increased, and an uplink delay can be reduced.

### (2) SBFD symbol and non (non)-SBFD symbol

The SBFD symbol may be considered as a symbol configured with SBFD, and the non-SBFD symbol may be considered as a symbol without being configured with SBFD. For uplink transmission, the non-SBFD symbol may be an uplink symbol or a flexible symbol. For downlink transmission, the non-SBFD symbol may be a downlink symbol or a flexible symbol.

### (3) System information block (system information block, SIB)

A system information transmission process is mainly that the terminal device receives some necessary parameters, sent by the network device, related to cell camping and access, including various system information blocks, such as a system information block 1 (system information block 1, SIB 1), a system information block 2 (system information block 2, SIB 2), and another SIB. For a terminal device in a radio resource control (radio resource control, RRC) idle (idle) state or an RRC inactive (inactive) state, the terminal device further needs to monitor a paging (paging) message sent by the network device.

Generally, for a terminal device in initial access, after detecting a synchronization signal block (synchronization signal block, SSB), the terminal device may receive the SIB 1 based on a parameter, obtained from a master information block (master information block, MIB), related to SIB 1 receiving. In NR, the SIB 1 is carried on a physical downlink shared channel (physical downlink shared channel, PDSCH), and is scheduled via a physical downlink control channel (physical downlink control channel, PDCCH). Specifically, the PDCCH carries downlink control information (downlink control information, DCI). The DCI includes information such as a time domain resource, a frequency domain resource, and a modulation and coding scheme for PDSCH transmission.

After the SIB 1 is received, the terminal device may continue to receive another SIB or a paging message as required.

It should be noted that both the SIB 1 and another SIB are periodically and repeatedly transmitted. For the SIB 1, a change periodicity of system information carried on the SIB 1 is 160 ms, and the SIB 1 may be repeatedly transmitted at a periodicity of 20 ms within the 160 ms. For a SIB other than the SIB 1, a transmission periodicity of the SIB is configured by the SIB 1.

### (4) Random access (random access, RA)

Generally, in a cell access process, the terminal device first detects an SSB sent by the network device to complete downlink time synchronization and frequency synchronization, and then receives system information sent by the network device, including the SIB 1, another SIB, and the like, to obtain configuration information of a cell. The configuration information of the cell includes configuration information related to cell camping, RA, and the like. Then, the terminal device completes uplink time synchronization with the network device in a random access process, and establishes an RRC connection to the network device. After the terminal device establishes the RRC connection to the network device, uplink and downlink service data transmission may be performed.

In the NR, there are two types of random access processes: a type-1 random access (type-1 RA) process and a type-2 random access (type-2 RA) process. The type-1 RA process is also referred to as a 4-step random access (4-step RA) process, and the type-2 RA process is also referred to as a 2-step random access (2-step RA) process. Based on whether there is a contention in preamble (preamble) sending between terminal devices, the random access process further includes a contention based random access (contention based random access, CBRA) process and a contention free random access (contention free random access, CFRA) process. The CBRA procedure and the CFRA procedure are basically the same.

The CBRA is used as an example, a basic procedure of the type-1 RA process may be shown in FIG. 6, and may specifically include the following four steps.

Step 601: A terminal device sends a preamble via a physical random access channel (physical random access channel, PRACH), that is, the terminal device sends a random access message 1 (message1, Msg1).

Before the terminal device sends the Msg1, the terminal device obtains a resource configuration of the PRACH by reading a system message, where the resource configuration mainly includes a time, frequency, a preamble sequence, and the like.

Step 602: After sending the Msg1, the terminal device starts a random access response window, and monitors, in the window, a random access response (random access response, RAR) sent by a network device, where the RAR may also be understood as a random access message 2 (message 2, Msg2).

Step 603: The terminal device sends a random access message 3 (message 3, Msg3) to the network device.

If the terminal device successfully detects the RAR of the terminal device in step 602, random access succeeds, and the terminal device continues to send the Msg3 based on an indication of the RAR. A main function of the Msg3 is to send an RRC connection setup request.

If the terminal device does not receive the RAR of the terminal device, random access fails, and the terminal device re-initiates, based on a backoff parameter indicated by the network device, a random access process until a maximum quantity of times of random access is reached.

Step 604: After sending the Msg3, the terminal device monitors and receives a random access message 4 (message 4, Msg4) delivered by the network device. The Msg4 carries a contention resolution (contention resolution) identifier and an air interface parameter configuration for the terminal device.

If the terminal device successfully receives the Msg4, it is considered that the current RA succeeds; otherwise, the RA fails. If the RA succeeds, the terminal device continues to send a message 5 (message 5, Msg5), where the Msg5 is mainly used to send an RRC setup complete command. If the RA fails, the terminal device re-initiates, based on the backoff parameter indicated by the network device, a random access process until a maximum quantity of times of random access is reached.

The type-2 RA process may be understood as that the foregoing four-step procedure is combined into a two-step procedure based on the type-1 RA. For example, a basic procedure of the type-2 RA process may be shown in FIG. 7, and may specifically include the following two steps.

Step 701: A terminal device may send a random access message A (messageA, MsgA) to a terminal device, where the MsgA includes a preamble and an identifier of the terminal device.

The MsgA may correspond to the foregoing Msg1 and Msg3, or may be understood as a combination message of the foregoing Msg1 and Msg3.

Step 702: The network device may send a random access message B (messageB, MsgB) to the terminal device, where the MsgB includes a contention resolution identifier, an air interface parameter configuration for the terminal device, and the like.

The MsgB may correspond to the foregoing Msg2 and Msg4, or may be understood as a combination message of the foregoing Msg2 and Msg4.

According to current standards, a time domain resource and a frequency domain resource (the time domain resource and the frequency domain resource may also be collectively referred to as a time-frequency resource) of an SBFD subband may be semi-statically configured by the network device via signaling, and the time domain resource and the frequency domain resource of the SBFD subband may be at a cell level, that is, time-frequency resources of SBFD of all terminal devices that support the SBFD are the same. In a possible method 1, in an initial access phase of the terminal device, the network device broadcasts the time-frequency resource of the SBFD subband via the SIB 1. In another possible method 2, after the terminal device enters an RRC connected state, the network device configures the time-frequency resource of the SBFD subband for the terminal device via signaling dedicated to the terminal device, for example, RRC signaling.

However, if the time-frequency resource of the SBFD subband is configured in the method 2, because the time-frequency resource of the SBFD subband is common to a cell, if common information of the cell is notified to each terminal device via signaling dedicated to the terminal device, signaling overheads are high.

If the time-frequency resource of the SBFD subband is configured in the method 1, a related configuration of the SBFD subband is activated and takes effect immediately. In this case, contention is generated with the following content currently being discussed in the current standard. The following content is discussed in the current standard: In principle, a terminal device in an RRC idle state or an inactive state does not support the SBFD. In other words, the terminal device in the RRC idle state or the inactive state still receives or sends data in an original manner, for example, receives a SIB or a paging message. If it can be considered that the terminal device supports the SBFD in the RA process, whether to support the SBFD in the RA process and how to support the SBFD in the RA process, for example, a step from which the SBFD is supported in the RA process, are still under discussion in a standard currently, and there is no clear method for implementation.

Based on this, an embodiment of this application provides a communication method, to configure a time domain resource and a frequency domain resource of an SBFD subband, so that signaling overheads can be reduced, and whether the configured time domain resource of the SBFD subband takes effect and/or the configured frequency domain resource of the SBFD subband takes effect can be determined.

In the following embodiments, the communication method provided in embodiments of this application is described in detail by using a network device and a terminal device as an example. It should be understood that an operation performed by the network device may alternatively be implemented through a processor, a chip, a chip system, a functional module, or the like in the network device; and an operation performed by the terminal device may alternatively be implemented through a processor, a chip, a chip system, a functional module, or the like in the terminal device. This is not limited in this application.

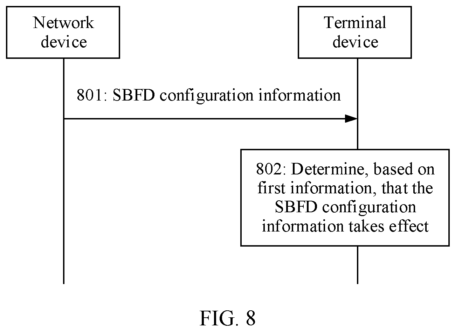

Based on the foregoing descriptions, an embodiment of this application provides a communication method. As shown in FIG. 8, a procedure of the method may include the following content.

Step 801: A network device sends SBFD configuration information to a terminal device, where the SBFD configuration information is used to configure a time domain resource and/or a frequency domain resource of an SBFD subband. Correspondingly, the terminal device receives the SBFD configuration information from the network device.

In this application, sending may also be described as outputting. That the network device sends the SBFD configuration information to the terminal device may alternatively be described as: The network device outputs the SBFD configuration information. For example, that the network device outputs the SBFD configuration information may be understood as that a baseband unit in the network device outputs the SBFD configuration information to a radio frequency unit in the network device. For another example, that the network device outputs the SBFD configuration information may be understood as that the radio frequency unit in the network device outputs the SBFD configuration information to the terminal device through an air interface.

The time domain resource and the frequency domain resource of the SBFD subband may also be referred to as a time-frequency resource of the SBFD subband. In some embodiments, the time domain resource of the SBFD subband may also be described as a time domain position of the SBFD subband, the frequency domain resource of the SBFD subband may also be described as a frequency domain position of the SBFD subband, and the time-frequency resource of the SBFD subband may also be described as a time-frequency position of the SBFD subband. This is not limited in this application.

In an optional implementation, the network device may configure the SBFD configuration information for the terminal device via a SIB, in other words, the network device may send the SIB to the terminal device, where the SIB includes the SBFD configuration information. For example, the SIB may be an SIB 1, or the like.

For SBFD, one carrier may include at least one downlink subband and at least one uplink subband. Whether there is a guard band (guard band) between the downlink subband and the uplink subband, and whether transmission can be performed on the guard band if there is the guard band are not limited in this application. In addition, whether the downlink subband may overlap the uplink subband is not limited in this application. In other words, in some examples, the SBFD subband may include an uplink subband and a downlink subband. In some other examples, the SBFD subband may include an uplink subband, a guard band, and a downlink subband.

In a possible implementation, the frequency domain resource of the SBFD subband may be configured based on a subcarrier spacing (subcarrier spacing, SCS). For example, the SBFD configuration information may include frequency domain resources of at least one group of SBFD subbands, and frequency domain resources of each group of SBFD subbands in the frequency domain resources of the at least one group of SBFD subbands correspond to (that is, are associated with) one SCS.

Optionally, the frequency domain resources of the at least one group of SBFD subbands separately correspond to a different SCS.

Optionally, the frequency domain resources of the at least one group of SBFD subbands may separately correspond to a same SCS, or frequency domain resources of some groups of SBFD subbands in the at least one group of SBFD subbands may correspond to a same SCS, and frequency domain resources of the remaining groups of SBFD subbands may correspond to different SCSs. This is not limited in this application.

It should be understood that when the frequency domain resources of the at least one group of SBFD subbands separately correspond to a different SCS, a quantity of groups of SBFD subbands is the same as a quantity of SCSs.

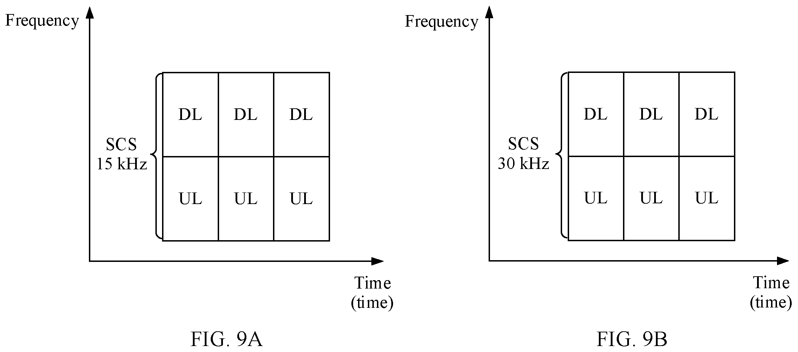

For example, as shown in FIG. 9A and FIG. 9B, two groups of SBFD subbands are used as an example. An SCS corresponding to frequency domain resources of one group of SBFD subbands may be 15 kilohertz (kHz) (as shown in FIG. 9A), and an SCS corresponding to frequency domain resources of the other group of SBFD subbands may be 30 kHz (as shown in FIG. 9B).

For example, a first group of SBFD subbands may include a plurality of subbands, and the first group of SBFD subbands is any group of SBFD subbands in the at least one group of SBFD subbands. The plurality of subbands may be understood as two subbands or more than two subbands, and the plurality of subbands include at least one downlink subband and one uplink subband.

In some implementations, the carrier is configured based on an SCS. For example, each of the at least one carrier corresponds to one SCS. Based on this, one carrier also corresponds to frequency domain resources of a group of SBFD subbands, and the corresponding carrier corresponds to the same SCS as the frequency domain resources of the group of SBFD subbands. In other words, there is a one-to-one correspondence between a frequency domain resource of the SBFD subband, an SCS, and a carrier. A carrier may be understood as a frequency range, a segment of frequency, or the like.

Correspondingly, a frequency domain resource of any subband included in the first group of SBFD subbands may be included in a first carrier, the first carrier corresponds to the first group of SBFD subbands, an SCS corresponding to frequency domain resources of the first group of SBFD subbands is the same as an SCS corresponding to the first carrier, and the first carrier is one of the at least one carrier. In this way, it can be ensured that resource alignment is performed on edges of the SBFD subband and the carrier.

For example, the first carrier is a carrier of 100 megahertz (MHz), the SCS corresponding to the first carrier is 15 kHz, the SCS corresponding to the frequency domain resources of the first group of SBFD subbands is 15 kHz, and the frequency domain resource of any subband included in the first group of SBFD subbands is within the carrier of 100 MHz.

In an optional implementation, when the network device indicates frequency domain resources of any group of SBFD subbands via the configuration information, the network device may indicate only a frequency domain resource of an uplink subband in the group of subbands, and a frequency domain resource that is not indicated is considered as a frequency domain resource of a downlink subband by default. Alternatively, only a frequency domain resource of a downlink subband in the group of subbands may be indicated, and a frequency domain resource that is not indicated is considered as a frequency domain resource of an uplink subband by default. This is not limited in this application.

It should be understood that the at least one group of SBFD subbands may also be described as at least one set of SBFD subbands, or may be described in another manner. The at least one carrier may also be described as at least one set of carriers, or may be described in another manner. This is not limited in this application.

In some embodiments, the carrier may also be classified into an uplink carrier and a downlink carrier. Correspondingly, a downlink carrier and a downlink subband of a same SCS correspond to each other, and an uplink carrier and an uplink subband of a same SCS correspond to each other.

Optionally, the terminal device may determine a valid resource based on an active bandwidth part (bandwidth part, BWP) and frequency domain resources of a second group of SBFD subbands, where an SCS corresponding to the frequency domain resources of the second group of SBFD subbands is the same as an SCS of the active BWP, and the second group of SBFD subbands is one group of SBFD subbands in the at least one group of SBFD subbands. Optionally, the second group of SBFD subbands may be the first group of SBFD subbands described above, or may be any group of SBFD subbands other than the first group of SBFD subbands in the at least one group of SBFD subbands. This is not limited in this application.

The terminal device may determine that a frequency domain resource on which the active BWP overlaps the frequency domain resources of the second group of SBFD subbands is the valid resource.

Correspondingly, the network device may also determine the valid resource based on the active BWP and the frequency domain resources of the second group of SBFD subbands. For a determining method of the network device, refer to a determining method of the terminal device. Details are not described herein again.

It may be understood that the valid resource may also be described as an available resource, a valid frequency domain resource, an available frequency domain resource, or the like.

In a possible implementation, the time domain resource of the SBFD subband is periodic, or it may be understood that a time domain pattern of the SBFD subband is periodically repeated. The network device may configure the time domain pattern of the SBFD subband based on the indication information. It should be understood that the SBFD subband described herein refers to all SBFD subbands, and is a general term for all the SBFD subbands. It may be understood that the SBFD subband includes the at least one group of SBFD subbands described above.

For example, the SBFD configuration information may include first indication information, the first indication information may indicate a slot position of the SBFD subband in a first time domain pattern, and the first time domain pattern may correspond to a first period length.

The first indication information may indicate the slot position of the SBFD subband in the first time domain pattern in any one of the following manners.

Manner a1: The first indication information indicates a start slot and a quantity of first consecutive slots of the SBFD subband in the first time domain pattern.

In Manner a1, the terminal device may determine the slot position of the SBFD subband in the first time domain pattern based on the start slot and the quantity of first consecutive slots. For example, if the start slot is a slot 1, and the quantity of first consecutive slots is 3, the terminal device may determine that the slot position of the SBFD subband in the first time domain pattern includes the slot 1 to a slot 3.

Manner a2: The first indication information indicates an end slot and a quantity of second consecutive slots of the SBFD subband in the first time domain pattern.

In Manner a2, the terminal device may determine the slot position of the SBFD subband in the first time domain pattern based on the end slot and the quantity of second consecutive slots. For example, if the end slot is a slot 4, and the quantity of second consecutive slots is 2, the terminal device may determine that the slot position of the SBFD subband in the first time domain pattern includes a slot 3 and the slot 4.

Manner a3: The first indication information indicates a start slot and an end slot of the SBFD subband in the first time domain pattern.

In Manner a3, the terminal device may determine the slot position of the SBFD subband in the first time domain pattern based on the start slot and the end slot. For example, if the start slot is a slot 1 and the end slot is a slot 3, the terminal device may determine that the slot position of the SBFD subband in the first time domain pattern includes the slot 1 to the slot 3.

Correspondingly, the network device may determine the slot position of the SBFD subband in the first time domain pattern in a method the same as that of the terminal device. Details are not described herein again.

Optionally, the SBFD configuration information may further include second indication information, and the second indication information may indicate a symbol position of the SBFD subband in a slot in the first time domain pattern.

The second indication information may indicate the symbol position of the SBFD subband in the slot in the first time domain pattern in any one of Manner b1 or Manner b2, and any one of Manner b3 or Manner b4.

Manner b1: The second indication information indicates a start symbol in a start slot of the SBFD subband in the first time domain pattern.

Manner b2: The second indication information indicates last M consecutive symbols in a start slot of the SBFD subband in the first time domain pattern, where M is a positive integer.

In Manner b2, the terminal device may determine, based on the last M consecutive symbols in the start slot in the first time domain pattern, a start symbol in the start slot of the SBFD subband in the first time domain pattern. For example, if the start slot includes 12 symbols, and M is 5, the terminal device may determine that the start symbol in the start slot of the SBFD subband in the first time domain pattern is an 8^{th} symbol in the start slot (that is, a symbol 8 in the start slot).

Manner b3: The second indication information indicates an end symbol in an end slot of the SBFD subband in the first time domain pattern.

Manner b4: The second indication information indicates first N consecutive symbols in an end slot of the SBFD subband in the first time domain pattern, where N is a positive integer.

In Manner b4, the terminal device may determine, based on the first N consecutive symbols in the end slot in the first time domain pattern, the end symbol in the end slot of the SBFD subband in the first time domain pattern. For example, if the end slot includes 12 symbols, and M is 6, the terminal device may determine that the end symbol in the end slot of the SBFD subband in the first time domain pattern is a 6^{th} symbol in the end slot (that is, a symbol 6 in the end slot).

In Manner b1 or Manner b2, the terminal device may determine a position of the start symbol in the start slot of the SBFD subband in the first time domain pattern. In Manner b3 or Manner b4, the terminal device may determine a position of the end symbol in the end slot of the SBFD subband in the first time domain pattern. Therefore, the terminal device may determine a symbol position of the SBFD subband in the slot in the first time domain pattern, that is, the symbol position in the slot in the first time domain pattern may include the start symbol in the start slot to the end symbol in the end slot.

For example, when the symbol positions of the SBFD subband in the slots in the first time domain pattern are determined in Manner b2 and Manner b4, still referring to the foregoing example, it may be obtained that the symbol positions of the SBFD subband in the slots in the first time domain pattern include the symbol 8 in the start slot to the symbol 6 in the end slot in the first time domain pattern.

Optionally, when the configuration information includes the first indication information and the second indication information, the first indication information may be understood as a first-level indication, and the second indication information may be understood as a second-level indication. In other words, on the basis that the first indication information indicates the slot position of the SBFD subband in the first time domain pattern, the second indication information may further indicate the symbol position of the SBFD subband in the slot in the first time domain pattern.

In an example, the first period length may be the same as a period length of a current TDD uplink-downlink configuration.

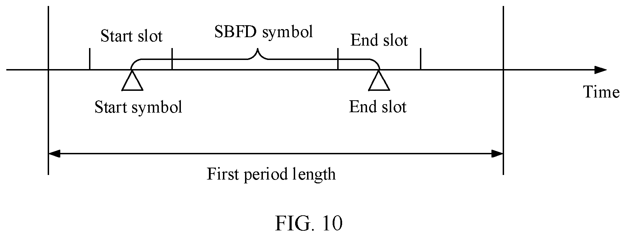

Based on the foregoing method, an example of the first time domain pattern may be shown in FIG. 10.

In some embodiments, the time domain resource of the SBFD subband may be configured in a dual-periodicity manner. It may also be understood that the network device may configure two time domain patterns. For example, in addition to a configuration of the first time domain pattern, the network device may further configure a second time domain pattern based on the indication information. The second time domain pattern corresponds to a second period length.

For example, the SBFD configuration information may further include third indication information, and the third indication information indicates a slot position of the SBFD subband in the second time domain pattern.

The third indication information may indicate the slot position of the SBFD subband in the second time domain pattern in any one of the following manners.

Manner c1: The third indication information indicates a start slot and a quantity of third consecutive slots of the SBFD subband in the second time domain pattern.

Manner c2: The third indication information indicates an end slot and a quantity of fourth consecutive slots of the SBFD subband in the second time domain pattern.

Manner c3: The third indication information indicates a start slot and an end slot of the SBFD subband in the second time domain pattern.

A principle of determining, by the terminal device, the slot position of the SBFD subband in the second time domain pattern in Manner c1 to Manner c3 is similar to a principle of determining, by the terminal device, the slot position of the SBFD subband in the first time domain pattern in Manner a1 to Manner a3. For details, refer to each other. Details are not described herein again. The same applies to the network device.

Optionally, the SBFD configuration information may further include fourth indication information, and the fourth indication information indicates a symbol position of the SBFD subband in a slot in the second time domain pattern.

The fourth indication information may indicate the symbol position of the SBFD subband in the slot in the second time domain pattern in any one of Manner d1 or Manner d2, and any one of Manner d3 or Manner d4.

Manner d1: The fourth indication information indicates a start symbol in a start slot of the SBFD subband in the second time domain pattern.

Manner d2: The fourth indication information indicates last P consecutive symbols in a start slot of the SBFD subband in the second time domain pattern, where P is a positive integer.

Manner d3: The fourth indication information indicates an end symbol in an end slot of the SBFD subband in the second time domain pattern.

Manner d4: The fourth indication information indicates first K consecutive symbols in an end slot of the SBFD subband in the second time domain pattern, where K is a positive integer.

Similarly, a principle of determining, by the terminal device, the symbol position of the SBFD subband in the second periodicity in Manner d1 to Manner d4 is similar to a principle of determining, by the terminal device, the symbol position of the SBFD subband in the first time domain pattern in Manner b1 to Manner b4. For details, refer to each other. Details are not described herein again. The same applies to the network device.

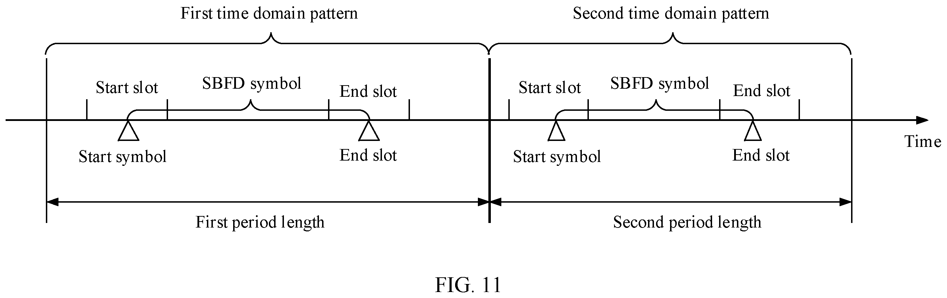

For example, FIG. 11 is a diagram of a first time domain pattern and a second time domain pattern in a dual-periodicity configuration scenario.

In some embodiments, the first period length and the second period length may be configured by the network device. Optionally, the first period length and the second period length may be the same or may be different. For example, the first period length is P1 milliseconds (ms), and the second period length is P2 ms, where P1 and P2 are positive numbers, and a value relationship between P1 and P2 is not limited in this application.

For example, in the dual-periodicity configuration scenario, the first period length and the second period length may be respectively the same as two period lengths of the TDD uplink-downlink configuration.

In an optional implementation, a third period length may alternatively be formed by using the first period length and the second period length, that is, the third period length is (P1+P2) ms. In this case, it may be understood that a third time domain pattern includes the first time domain pattern and the second time domain pattern, and the third time domain pattern corresponds to the third period length, or it may be understood that the network device periodically indicates two time domain patterns.

Optionally, P1+P2 may be exactly divided by 20 ms. In this way, it can be ensured that an integer quantity of SBFD time domain periodicities are included within 20 ms, which helps reduce implementation complexity of the terminal device and the network device, and also helps align with a configured TDD uplink time domain resource.

In some embodiments, the time domain resource of the SBFD subband may correspond to a reference SCS associated with a cell-specific uplink-downlink TDD configuration.

For example, the cell-specific uplink-downlink TDD configuration may be a specific uplink-downlink TDD configuration of a working cell or a serving cell of the terminal device.

Optionally, an SCS corresponding to the time domain resource of the SBFD subband may alternatively be less than or equal to the reference SCS associated with the cell-specific uplink-downlink TDD configuration.

In an example, the reference SCS may be used to determine a time domain boundary of the SBFD subband. Specifically, the terminal device may determine a boundary of a time unit like a symbol or a slot by using the reference SCS, and may further determine a boundary of the time domain resource of the SBFD subband based on the slot position and/or the symbol position of the SBFD subband.

It should be understood that the frequency domain resource of the SBFD subband is associated with the time domain resource of the SBFD subband, and it may be understood that the frequency domain resource of the SBFD subband appears or takes effect on the time domain resource of the SBFD subband.

It should be noted that the foregoing related content of the SBFD configuration information may be implemented independently without depending on the solutions in embodiments of this application, or it may be understood that the SBFD configuration information in any scenario may be described by using the foregoing content.

Step 802: The terminal device determines, based on first information, that the SBFD configuration information takes effect, where the first information indicates that the SBFD configuration information takes effect.

Optionally, the first information may indicate that the SBFD configuration information does not take effect. Correspondingly, the terminal device may determine, based on the first information, that the SBFD configuration information does not take effect.

In this application, taking effect may also be described as activation or the like.

In some embodiments, the first information may be received by the terminal device from the network device, that is, the network device sends the first information to the terminal device.

For example, the network device sends a first RRC message to the terminal device. Correspondingly, the terminal device receives the first RRC message from the network device, where the first RRC message includes the first information.

That the network device sends the first RRC message to the terminal device may alternatively be described as: The network device outputs the first RRC message. For example, that the network device outputs the first RRC message may be understood as that the baseband unit in the network device outputs the first RRC message to the radio frequency unit in the network device. For another example, that the network device outputs the first RRC message may be understood as that the radio frequency unit in the network device outputs the first RRC message to the terminal device through an air interface.

For another example, the first information may alternatively be carried on other signaling of the network device, for example, a medium access control control element (medium access control control element, MAC CE), downlink control information (downlink control information, DCI), a random access message 2, a random access message 4, or a random access message B.

In some other embodiments, the first information may be predefined, that is, the terminal device may obtain the predefined first information. For example, the first information may include a predefined first rule, and the first rule may include at least one of the following rules.

Rule 1: It is determined, based on an RRC setup (RRC setup) message, an RRC resume (RRC resume) message, or an RRC reestablishment (RRC reestablishment) message from the network device, that the SBFD configuration information takes effect.

For example, after the terminal device receives the RRC setup message, the RRC resume message, or the RRC reestablishment message from the network device, the SBFD configuration information takes effect. In a possible embodiment, the RRC setup message, the RRC resume message, or the RRC reestablishment message is carried in the random access message 4 or the random access message B. Therefore, it may also be understood that after the terminal device receives the random access message 4 or the random access message B from the network device, the SBFD configuration information takes effect.

Rule 2: It is determined, based on the random access message 1, that the SBFD configuration information takes effect.

For example, after the terminal device sends the random access message 1, the SBFD configuration information takes effect. For another example, when the terminal device sends the random access message 1, the SBFD configuration information takes effect.

That the terminal device sends the random access message 1 may also be understood as that the terminal device sends a random access preamble.

Optionally, in Rule 2, the terminal device may send first capability information to the network device via the random access message 1 in the random access process, where the first capability information indicates that the terminal device supports the SBFD.

Rule 3: It is determined, based on the random access message 3, that the SBFD configuration information takes effect.

For example, after the terminal device sends the random access message 3, the SBFD configuration information takes effect.

Optionally, in Rule 3, the terminal device may send first capability information to the network device via the random access message 3 in the random access process.

Rule 4: It is determined, based on a random access message A, that the SBFD configuration information takes effect.

For example, after the terminal device sends the random access message A, the SBFD configuration information takes effect. For another example, when the terminal device sends the random access message A, the SBFD configuration information takes effect.

That the terminal device sends the random access message A may include that the terminal device sends a random access preamble.

Optionally, in Rule 4, the terminal device may send first capability information to the network device via the random access message A in the random access process.

For example, the following describes in detail, in different scenarios, the first information and a specific case in which the terminal device determines, based on the first information, that the SBFD configuration information takes effect.

Scenario e1: A protocol does not support a terminal device in an RRC idle state or an RRC inactive state in supporting the SBFD in the random access process; or a protocol supports a terminal device in an RRC idle state or an RRC inactive state in supporting the SBFD in the random access process, but the network device does not enable this function. In Scenario e1, that the network device does not enable the function may be understood as that the network device does not configure or activate the SBFD for the terminal device in the random access process.

In Scenario e1, if the terminal device sends the first capability information to the network device in the random access process, and the first capability information indicates that the SBFD is supported, the first information may be predefined, for example, in the following Manner f1, or the first information may be sent by the network device to the terminal device, for example, in the following Manner f2 and Manner f3.

Optionally, in Scenario e1, when sending the first capability information to the network device in the random access process, the terminal device may send the first capability information to the network device via the random access message 1, the random access message 3, or the random access message A in the random access process.

Manner f1: The first information may include the predefined first rule, and the first rule may include the foregoing Rule 1.

For example, in Manner f1, after the terminal device receives the RRC setup message, the RRC resume message, or the RRC reestablishment message from the network device, the SBFD configuration information takes effect.

Generally, the RRC setup (RRC setup) message, the RRC resume (RRC resume) message, or the RRC reestablishment (RRC reestablishment) message is carried via the random access message 4 or the random access message B. Therefore, in Manner f1, Rule 1 may also be understood as determining, based on the random access message 4 or the random access message B from the network device, that the SBFD configuration information takes effect. For example, the SBFD configuration information takes effect after the terminal device receives the random access message 4 or the random access message B from the network device.

In Manner f1, it is determined, based on the predefined rule, that the SBFD configuration information takes effect, so that indication signaling overheads can be reduced. In addition, when the SBFD configuration information takes effect, the terminal device has completed the random access process, thereby resolving a contention between that the SBFD configuration information takes effect and that the terminal device cannot use the SBFD configuration information in the random access process.

Manner f2: The network device sends the random access message 4 or the random access message B to the terminal device, where the random access message 4 or the random access message B includes the first information.

In Manner f2, the random access message 4 or the random access message B is used to explicitly indicate that the SBFD configuration information takes effect. This can ensure scheduling flexibility of the network device, and when the SBFD configuration information takes effect, the terminal device has completed the random access process, thereby resolving the contention between that the SBFD configuration information takes effect and that the terminal device cannot use the SBFD configuration information in the random access process.

Manner f3: After the terminal device enters an RRC connected mode, the network device sends the first RRC message to the terminal device, where the first RRC message includes the first information.

In Manner f3, after the terminal device enters the RRC connected mode, the network device may explicitly indicate that the SBFD configuration information takes effect, so that scheduling flexibility of the network device can be ensured, and the contention between that the SBFD configuration information takes effect and that the terminal device cannot use the SBFD configuration information in the random access process can be resolved.

In Scenario e1, if the terminal device does not send the first capability information to the network device in the random access process, the first information may be sent by the network device to the terminal device, for example, in the following Manner f4.

Manner f4 is the same as Manner f3, that is, after the terminal device enters the RRC connected mode, the network device sends the first RRC message to the terminal device.

Optionally, in Manner f4, before the network device sends the first RRC message to the terminal device, the terminal device may send a second RRC message to the network device, where the second RRC message includes the first capability information. In this way, when the terminal device supports the SBFD, the network device may send the first information to the terminal device via the first RRC message, that is, when it is ensured that the terminal device can use the SBFD configuration information, the network device indicates that the SBFD configuration information takes effect, thereby improving accuracy of taking effect of the SBFD configuration information.

Scenario e2: It is assumed that a protocol does not support a terminal device in an RRC idle mode or an RRC inactive mode in supporting the SBFD in a PRACH transmission process (which may also be understood as a random access message 1 transmission process), but supports the terminal device in supporting the SBFD in another random access message transmission process; or a protocol supports a terminal device in an RRC idle mode or an RRC inactive mode in supporting the SBFD in a PRACH transmission process, but the network device does not enable this function. In Scenario e2, that the network device does not enable the function may be understood as that the network device does not configure or activate the SBFD for the terminal device in the PRACH transmission process.

In Scenario e2, if the terminal device sends the first capability information to the network device in the random access process, the first information may be predefined, for example, in the following Manner g1 to Manner g4, or the first information may be sent by the network device to the terminal device, for example, in the following Manner g5 to Manner g7.

Manner g1: The first information may include the predefined first rule, and the first rule may include the foregoing Rule 2.

For example, in Manner g1, if the terminal device sends the first capability information to the network device via the random access message 1 in the random access process, the SBFD configuration information takes effect after the random access message 1 is sent.

In Manner g1, it is determined, based on the predefined rule, that the SBFD configuration information takes effect, so that indication signaling overheads can be reduced. In addition, when the SBFD configuration information takes effect, the terminal device has completed transmission of the random access message 1, thereby resolving a contention between that the SBFD configuration information takes effect and that the terminal device cannot use the SBFD configuration information when the random access message 1 is transmitted.

Manner g2: The first information may include the predefined first rule, and the first rule may include the foregoing Rule 3.

For example, in Manner g2, if the terminal device sends the first capability information to the network device via the random access message 3 in the random access process, the SBFD configuration information takes effect after the random access message 3 is sent.

In Manner g2, it is determined, based on the predefined rule, that the SBFD configuration information takes effect, so that indication signaling overheads can be reduced. In addition, when the SBFD configuration information takes effect, the terminal device has completed transmission of the random access message 1, thereby resolving a contention between that the SBFD configuration information takes effect and that the terminal device cannot use the SBFD configuration information when the random access message 1 is transmitted.

Manner g3: The first information may include the predefined first rule, and the first rule may include the foregoing Rule 4.

For example, in Manner g3, if the terminal device sends the first capability information to the network device via the random access message A in the random access process, the SBFD configuration information takes effect after the random access message A is sent.

In Manner g3, it is determined, based on the predefined rule, that the SBFD configuration information takes effect, so that indication signaling overheads can be reduced. In addition, when the SBFD configuration information takes effect, the terminal device completes transmission of the random access message A, thereby resolving a contention between that the SBFD configuration information takes effect and that the terminal device cannot use the SBFD configuration information when the random access message A is transmitted.

The Manner g4 is the same as the foregoing Manner f1. For details, refer to each other. Details are not described herein again.

Manner g5: The network device sends the random access message 2 to the terminal device, where the random access message 2 includes the first information.

Optionally, if the terminal device sends the first capability information to the network device via the random access message 1 in the random access process, the network device may include the first information in the random access message 2.

In Manner g5, when the SBFD configuration information takes effect, the terminal device has completed transmission of the random access message 1, thereby resolving a contention between that the SBFD configuration information takes effect and that the terminal device cannot use the SBFD configuration information when the random access message 1 is transmitted.

The Manner g6 is the same as the foregoing Manner f2. For details, refer to each other. Details are not described herein again.

The Manner g7 is the same as the foregoing Manner f3. For details, refer to each other. Details are not described herein again.

In Scenario e2, if the terminal device does not send the first capability information to the network device in the random access process, the first information may be sent by the network device to the terminal device, for example, in the following Manner g8.

The Manner g8 is the same as the foregoing Manner f4. For details, refer to each other. Details are not described herein again.

Scenario e3: A protocol supports a terminal device in an RRC idle state or an RRC inactive state in supporting the SBFD in the random access process, and the network device configures PRACH resources on both an SBFD symbol and a non (non)-SBFD symbol.

In Scenario e3, if the terminal device sends the random access preamble by using the PRACH resource on the SBFD symbol, the first information may be predefined, for example, in the following Manner h1.

Manner h1: The first information may include the predefined first rule, and the first rule may include the foregoing Rule 2 or Rule 4.

For example, in Manner f1, the SBFD configuration information takes effect when the terminal device sends the random access preamble to the network device.

Effect that can be achieved in Manner h1 is similar to that in the foregoing Manner g1 or Manner g3. For details, refer to each other. Details are not described herein again.

In Scenario e3, if the terminal device sends the random access preamble by using the PRACH resource on the non-SBFD symbol, the first information is the same as the first information in the foregoing Scenario e2. For details, refer to Manner g1 to Manner g8 in the foregoing Scenario e2. Details are not described herein again.

In some examples, a slot including an SBFD symbol may also be understood as an SBFD slot.

In an optional implementation, there may be a switching (transition) time between an SBFD slot (or symbol) and a non-SBFD slot (or symbol). The switching (transition) time is required mainly considering different implementations of software or hardware, such as an antenna or a filter, of the network device or the terminal device in two types of slots (or symbols), or considering a reason like uplink time synchronization. Specifically, whether there is a switching (transition) time between the SBFD slot (or symbol) and the non-SBFD slot (or symbol) has the following several possible implementations.

A possible implementation 1 may be as follows:
If a preceding slot (or symbol) is a downlink slot (or symbol), and a subsequent slot (or symbol) is an SBFD slot (or symbol), then:
There is no switching (transition) time between downlink subbands of the preceding slot (or symbol) and the subsequent slot (or symbol).

Alternatively, there is the switching (transition) time between uplink subbands of the preceding slot (or symbol) and the subsequent slot (or symbol). For example, the switching (transition) time is X, X is greater than 0, and a unit of X may be a symbol, a slot, a subframe, a millisecond, a microsecond, or the like. The switching (transition) time falls within the preceding slot (or symbol) and/or the subsequent slot (or symbol).

A possible implementation 2 may be as follows:
If a preceding slot (or symbol) is an SBFD slot (or symbol), and a subsequent slot (or symbol) is an uplink slot (or symbol), then:

There is the switching (transition) time between downlink subbands of the preceding slot (or symbol) and the subsequent slot (or symbol). For example, the switching (transition) time is Y, Y is greater than 0, and a unit of Y may be a symbol, a slot, a subframe, a millisecond, a microsecond, or the like. The switching (transition) time falls within the preceding slot (or symbol) and/or the subsequent slot (or symbol).

Alternatively, there is the switching (transition) time between uplink subbands of the preceding slot (or symbol) and the subsequent slot (or symbol). For example, the switching (transition) time is Z, Z is greater than 0, and a unit of Z may be a symbol, a slot, a subframe, a millisecond, a microsecond, or the like. The switching (transition) time falls within the preceding slot (or symbol) and/or the subsequent slot (or symbol). A value relationship between Y and Z is not limited in this application.

It should be noted that the foregoing related content of whether there is a switching (transition) time between an SBFD slot (or symbol) and a non-SBFD slot (or symbol) may be implemented independently without depending on the solutions in embodiments of this application, which may alternatively be understood as that whether there is a switching (transition) time between an SBFD slot (or symbol) and a non-SBFD slot (or symbol) in any scenario may be described by using the foregoing content.

In some embodiments, the network device configures the SBFD configuration information for the terminal device in the foregoing embodiment. The SBFD configuration information may be considered as cell-specific SBFD configuration information. The following provides extended descriptions of configuring the SBFD configuration information for the terminal device by the network device.

The current network device further configures cell-specific TDD uplink-downlink configuration information and terminal device-specific TDD uplink-downlink configuration information for the terminal device. The cell-specific TDD uplink-downlink configuration information is used to configure a cell-common TDD uplink-downlink configuration. The cell-common TDD uplink-downlink configuration includes a downlink slot (or symbol), an uplink slot (or symbol), and a flexible slot (or symbol). The downlink slot (or symbol) is used for downlink transmission, the uplink slot (or symbol) is used for uplink transmission, and the flexible slot (or symbol) is used for downlink transmission or uplink transmission. The terminal device-specific TDD uplink-downlink configuration information is used to configure a specific TDD uplink-downlink configuration for the terminal device. Specifically, for a slot (or symbol) indicated as a downlink or uplink slot (or symbol) by the cell-specific TDD uplink-downlink configuration information, the terminal device-specific TDD uplink-downlink configuration information cannot change a link direction of the slot (or symbol), and still needs to maintain downlink or uplink. For a flexible slot (or symbol) indicated by the cell-specific TDD uplink-downlink configuration information, the terminal device-specific TDD uplink-downlink configuration information may change the link direction of the slot (or symbol). For example, the terminal device-specific TDD uplink-downlink configuration information may indicate the slot as a downlink slot (or symbol), or an uplink slot (or symbol), or still indicate the slot as a flexible slot (or symbol).

For example, the following describes in detail a relationship between the cell-specific TDD uplink-downlink configuration information, the terminal device-specific TDD uplink-downlink configuration information, and the cell-specific SBFD configuration information. It should be noted that, functions of the cell-specific TDD uplink-downlink configuration information and the terminal device-specific TDD uplink-downlink configuration information in the following and those in the conventional technology (for example, that of the current cell-specific TDD uplink-downlink configuration information and the terminal device-specific TDD uplink-downlink configuration information described above) may be the same, or may be different. This is not limited in this application.

In an optional implementation, a relationship between the cell-specific TDD uplink-downlink configuration information and the cell-specific SBFD configuration information may be as follows:

The cell-specific SBFD configuration information may be used to configure an SBFD subband in a slot (or symbol) indicated as a downlink slot (or symbol) or a flexible slot (or symbol) by the cell-specific TDD uplink-downlink configuration information. Alternatively, the cell-specific SBFD configuration information may indicate a slot (or symbol) indicated as a downlink slot (or symbol) or a flexible slot (or symbol) by the cell-specific TDD uplink-downlink configuration information as an SBFD slot (or symbol). Whether the cell-specific SBFD configuration information can be used to configure an SBFD subband in a slot (or symbol) indicated as an uplink slot (or symbol) or a flexible slot (or symbol) by the cell-specific TDD uplink-downlink configuration information is not limited in this application. The foregoing content may also be understood as follows: A priority of the cell-specific SBFD configuration information is higher than that of the cell-specific TDD uplink-downlink configuration information at least in a downlink slot (or symbol) or a flexible slot (or symbol).

In an optional implementation, based on the cell-specific TDD uplink-downlink configuration information and the cell-specific SBFD configuration information, the network device may further configure the terminal device-specific TDD uplink-downlink configuration information for the terminal device. The relationship between the three pieces of configuration information includes the following several possible implementations.

A first possible implementation may be as follows:
For a slot (or symbol), indicated as a downlink slot or an uplink slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information cannot change a link direction of the slot (or symbol), and still needs to maintain downlink or uplink.

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol), or still maintain the slot (or symbol) as a flexible slot (or symbol).

Alternatively, for a slot (or symbol), indicated as a downlink slot or an uplink slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information cannot change a link direction of the slot (or symbol). Specifically, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband.

Alternatively, for a slot (or symbol), indicated as a flexible slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information cannot change a link direction of the slot (or symbol). Specifically, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband.

A second possible implementation may be as follows:
For a slot (or symbol), indicated as a downlink slot or an uplink slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information cannot change a link direction of the slot (or symbol), and still needs to maintain downlink or uplink.

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol), or still maintain the slot (or symbol) as a flexible slot (or symbol).

Alternatively, for a slot (or symbol), indicated as a downlink slot or an uplink slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol) that is not configured with an SBFD subband, in other words, the terminal device-specific TDD uplink-downlink configuration information may disable the configuration of the SBFD subband.

Alternatively, for a slot (or symbol), indicated as a flexible slot by the cell-specific TDD uplink-downlink configuration information, that is configured with an SBFD subband by the cell-specific SBFD configuration information (that is, configured as an SBFD slot/symbol), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot, an uplink slot, or a flexible slot (or symbol) that is not configured with an SBFD subband, in other words, the terminal device-specific TDD uplink-downlink configuration information may disable the configuration of the SBFD subband.

A third possible implementation may be as follows:
For a slot (or symbol), indicated as a downlink slot or an uplink slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may configure an SBFD subband for the slot (or symbol), in other words, the terminal device-specific TDD uplink-downlink configuration information may configure the slot (or symbol) as an SBFD slot (or symbol).

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may configure an SBFD subband for the slot (or symbol), in other words, the terminal device-specific TDD uplink-downlink configuration information may configure the slot (or symbol) as an SBFD slot (or symbol).

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol), or still maintain the slot (or symbol) as a flexible slot (or symbol).

Alternatively, for a slot (or symbol), indicated as a downlink slot or an uplink slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information cannot change a link direction of the slot (or symbol). Specifically, the terminal device-specific TDD uplink-downlink configuration information cannot rewrite or reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband.

Alternatively, for a slot (or symbol), indicated as a flexible slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information cannot change a link direction of the slot (or symbol). Specifically, the terminal device-specific TDD uplink-downlink configuration information cannot rewrite/reset the slot (or symbol) to a downlink slot, an uplink slot, or a flexible slot (or symbol) that is not configured with an SBFD subband, in other words, the terminal device-specific TDD uplink-downlink configuration information cannot disable the configuration of the SBFD subband.

A fourth possible implementation may be as follows:
For a slot (or symbol), indicated as a downlink slot or an uplink slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may configure an SBFD subband for the slot (or symbol), in other words, the terminal device-specific TDD uplink-downlink configuration information may configure the slot (or symbol) as an SBFD slot (or symbol).

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may configure an SBFD subband for the slot (or symbol), in other words, the terminal device-specific TDD uplink-downlink configuration information may configure the slot (or symbol) as an SBFD slot (or symbol).

Alternatively, for a slot (or symbol), indicated as a flexible slot by the cell-specific TDD uplink-downlink configuration information, that is not configured with an SBFD subband by the cell-specific SBFD configuration information (that is, not configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol), or still maintain the slot (or symbol) as a flexible slot (or symbol).

Alternatively, for a slot (or symbol), indicated as a downlink slot or an uplink slot by the cell-specific TDD uplink-downlink configuration information, that is configured with an SBFD subband by the cell-specific SBFD configuration information (that is, configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot or an uplink slot (or symbol) that is not configured with an SBFD subband, in other words, the terminal device-specific TDD uplink-downlink configuration information may disable the configuration of the SBFD subband.

Alternatively, for a slot (or symbol), indicated as a flexible slot by the cell-specific TDD uplink-downlink configuration information, that is configured with an SBFD subband by the cell-specific SBFD subband configuration information (that is, configured as an SBFD slot (or symbol)), the terminal device-specific TDD uplink-downlink configuration information may change a link direction of the slot (or symbol). Specifically, the terminal device-specific TDD uplink-downlink configuration information may rewrite or reset the slot (or symbol) to a downlink slot, an uplink slot, or a flexible slot (or symbol) that is not configured with an SBFD subband, in other words, the terminal device-specific TDD uplink-downlink configuration information may disable the configuration of the SBFD subband.

It may be understood that, in the third possible implementation and the fourth possible implementation, the terminal device-specific TDD uplink-downlink configuration may be used to configure an SBFD configuration for the terminal device.

It should be noted that the foregoing described content related to the relationship between the cell-specific TDD uplink-downlink configuration information, the terminal device-specific TDD uplink-downlink configuration information, and the cell-specific SBFD configuration information may be implemented independently without depending on the solutions in embodiments of this application. It may also be understood that the relationship between the cell-specific TDD uplink-downlink configuration information, the terminal device-specific TDD uplink-downlink configuration information, and the cell-specific SBFD configuration information in any scenario may be implemented by using the foregoing described content.

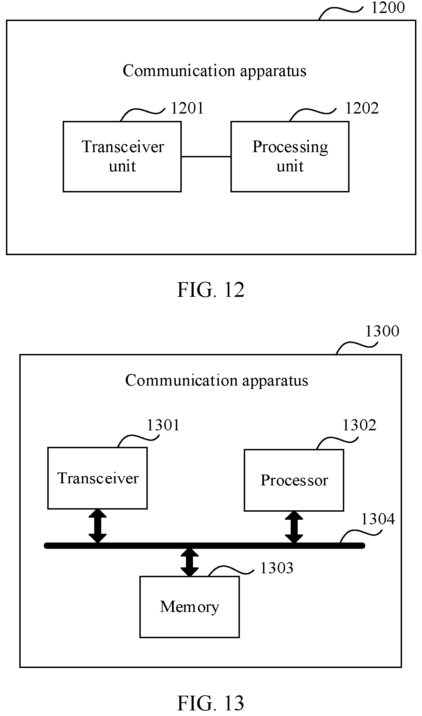

Based on the foregoing embodiments, an embodiment of this application further provides a communication apparatus. As shown in FIG. 12, a communication apparatus 1200 may include a processing unit 1202. Optionally, the communication apparatus 1200 may further include a transceiver unit 1201. The transceiver unit 1201 is used by the communication apparatus 1200 to perform communication, for example, receive information (a message or data) or send information (a message or data). The processing unit 1202 is configured to: control and manage an action of the communication apparatus 1200. The processing unit 1202 may further control a step performed by the transceiver unit 1201.

For example, the communication apparatus 1200 may be specifically the terminal device in the foregoing embodiments, a processor, a chip, a chip system, a functional module, or the like in the terminal device. Alternatively, the communication apparatus 1200 may be specifically the network device in the foregoing embodiments, or a processor, a chip, a chip system, a functional module, or the like in the network device.

In an embodiment, when the communication apparatus 1200 is configured to implement the functions of the terminal device in the embodiment shown in FIG. 8, the transceiver unit 1201 may be configured to receive subband full-duplex SBFD configuration information from the network device, where the SBFD configuration information is used to configure a time domain resource and/or a frequency domain resource of an SBFD subband; and the processing unit 1202 may be configured to determine, based on first information, that the SBFD configuration information takes effect, where the first information indicates that the SBFD configuration information takes effect.

In an optional implementation, when receiving the SBFD configuration information from the network device, the transceiver unit 1201 may be configured to: receive a system information block SIB from the network device, where the SIB includes the SBFD configuration information.

For example, the SBFD configuration information includes frequency domain resources of at least one group of SBFD subbands, frequency domain resources of each group of SBFD subbands in the frequency domain resources of the at least one group of SBFD subbands correspond to one subcarrier spacing SCS, a first group of SBFD subbands includes a plurality of subbands, and the first group of SBFD subbands is any group of SBFD subbands in the at least one group of SBFD subbands.

Optionally, a frequency domain resource of any subband included in the first group of SBFD subbands is included in a first carrier, the first carrier corresponds to the first group of SBFD subbands, and an SCS corresponding to frequency domain resources of the first group of SBFD subbands is the same as an SCS corresponding to the first carrier.

In some embodiments, the processing unit 1202 may be further configured to determine a valid resource based on an active bandwidth part BWP and frequency domain resources of a second group of SBFD subbands, where an SCS corresponding to the frequency domain resources of the second group of SBFD subbands is the same as an SCS of the active BWP, and the second group of SBFD subbands is one group of SBFD subbands in the at least one group of SBFD subbands.

In a possible implementation, the SBFD configuration information includes first indication information, the first indication information indicates a slot position of the SBFD subband in a first time domain pattern, and the first time domain pattern corresponds to a first period length.

That the first indication information indicates the slot position of the SBFD subband in the first time domain pattern may include: the first indication information indicates a start slot and a quantity of first consecutive slots of the SBFD subband in the first time domain pattern; the first indication information indicates an end slot and a quantity of second consecutive slots of the SBFD subband in the first time domain pattern; or the first indication information indicates a start slot and an end slot of the SBFD subband in the first time domain pattern.

Optionally, the SBFD configuration information further includes second indication information, and the second indication information indicates a symbol position of the SBFD subband in a slot in the first time domain pattern.

For example, that the second indication information indicates the symbol position of the SBFD subband in the slot in the first time domain pattern includes: The second indication information indicates a start symbol in the start slot of the SBFD subband in the first time domain pattern, or last M consecutive symbols in the start slot in the first time domain pattern, where M is a positive integer; and/or
the second indication information indicates an end symbol in the end slot of the SBFD subband in the first time domain pattern, or first N consecutive symbols in the end slot in the first time domain pattern, where N is a positive integer.

In another possible implementation, the SBFD configuration information further includes third indication information, the third indication information indicates a slot position of the SBFD subband in a second time domain pattern, and the second time domain pattern corresponds to a second period length.

For example, that the third indication information indicates the slot position of the SBFD subband in the second time domain pattern includes: The third indication information indicates a start slot and a quantity of third consecutive slots of the SBFD subband in the second time domain pattern; the third indication information indicates an end slot and a quantity of fourth consecutive slots of the SBFD subband in the second time domain pattern; or the third indication information indicates a start slot and an end slot of the SBFD subband in the second time domain pattern.

Optionally, the SBFD configuration information further includes fourth indication information, and the fourth indication information indicates a symbol position of the SBFD subband in a slot in the second time domain pattern.

For example, that the fourth indication information indicates the symbol position of the SBFD subband in the slot in the second time domain pattern includes: The fourth indication information indicates a start symbol in the start slot of the SBFD subband in the second time domain pattern, or last P consecutive symbols in the start slot in the second time domain pattern, where P is a positive integer; and/or
the fourth indication information indicates an end symbol in the end slot of the SBFD subband in the second time domain pattern, or first K consecutive symbols in the end slot in the second time domain pattern, where K is a positive integer.

In another possible implementation, the time domain resource of the SBFD subband corresponds to a reference SCS associated with a cell-specific uplink-downlink time division duplexing TDD configuration.

The reference SCS is used to determine a time domain boundary of the SBFD subband.

In some embodiments, the transceiver unit 1201 may be further configured to receive a first RRC message from the network device, where the first RRC message includes the first information.

In some embodiments, the first information includes a predefined first rule, and the first rule includes: determining that the SBFD configuration information takes effect based on an RRC setup message, an RRC resume message, or an RRC reestablishment message from the network device; determining that the SBFD configuration information takes effect based on a random access message 1; determining that the SBFD configuration information takes effect based on a random access message 3; or determining that the SBFD configuration information takes effect based on a random access message A.

In an optional implementation, the transceiver unit 1201 may be further configured to send first capability information to the network device, where the first capability information indicates that a terminal device supports SBFD.

In another embodiment, when the communication apparatus 1200 is configured to implement the functions of the network device in the embodiment shown in FIG. 8, the transceiver unit 1201 may be configured to: send subband full duplex SBFD configuration information to a terminal device, where the SBFD configuration information is used to configure a time domain resource and/or a frequency domain resource of an SBFD subband; and send first information to the terminal device, where the first information indicates that the SBFD configuration information takes effect. The processing unit 1202 may be configured to control an operation of the transceiver unit 1201.

In an optional implementation, when sending the SBFD configuration information to the terminal device, the transceiver unit 1201 may be configured to send a system information block SIB to the terminal device, where the SIB includes the SBFD configuration information.

For example, the SBFD configuration information includes frequency domain resources of at least one group of SBFD subbands, frequency domain resources of each group of SBFD subbands in the frequency domain resources of the at least one group of SBFD subbands correspond to one subcarrier spacing SCS, a first group of SBFD subbands includes a plurality of subbands, and the first group of SBFD subbands is any group of SBFD subbands in the at least one group of SBFD subbands.

Optionally, a frequency domain resource of any subband included in the first group of SBFD subbands is included in a first carrier, the first carrier corresponds to the first group of SBFD subbands, and an SCS corresponding to frequency domain resources of the first group of SBFD subbands is the same as an SCS corresponding to the first carrier.

In some embodiments, the SBFD configuration information includes first indication information, the first indication information indicates a slot position of the SBFD subband in a first time domain pattern, and the first time domain pattern corresponds to a first period length.

For example, that the first indication information indicates the slot position of the SBFD subband in the first time domain pattern may include: the first indication information indicates a start slot and a quantity of first consecutive slots of the SBFD subband in the first time domain pattern; the first indication information indicates an end slot and a quantity of second consecutive slots of the SBFD subband in the first time domain pattern; or the first indication information indicates a start slot and an end slot of the SBFD subband in the first time domain pattern.

Optionally, the SBFD configuration information further includes second indication information, and the second indication information indicates a symbol position of the SBFD subband in a slot in the first time domain pattern.

For example, that the second indication information indicates the symbol position of the SBFD subband in the slot in the first time domain pattern includes: The second indication information indicates a start symbol in the start slot of the SBFD subband in the first time domain pattern, or last M consecutive symbols in the start slot in the first time domain pattern, where M is a positive integer; and/or
the second indication information indicates an end symbol in the end slot of the SBFD subband in the first time domain pattern, or first N consecutive symbols in a start symbol in the end slot in the first time domain pattern, where N is a positive integer.

In some embodiments, the SBFD configuration information further includes third indication information, the third indication information indicates a slot position of the SBFD subband in a second time domain pattern, and the second time domain pattern corresponds to a second period length.

For example, that the third indication information indicates the slot position of the SBFD subband in the second time domain pattern includes: The third indication information indicates a start slot and a quantity of third consecutive slots of the SBFD subband in the second time domain pattern; the third indication information indicates an end slot and a quantity of fourth consecutive slots of the SBFD subband in the second time domain pattern; or the third indication information indicates a start slot and an end slot of the SBFD subband in the second time domain pattern.

Optionally, the SBFD configuration information further includes fourth indication information, and the fourth indication information indicates a symbol position of the SBFD subband in a slot in the second time domain pattern.

For example, that the fourth indication information indicates the symbol position of the SBFD subband in the slot in the second time domain pattern includes: The fourth indication information indicates a start symbol in the start slot of the SBFD subband in the second time domain pattern, or last P consecutive symbols in the start slot in the second time domain pattern, where P is a positive integer; and/or
the fourth indication information indicates an end symbol in the end slot of the SBFD subband in the second time domain pattern, or first K consecutive symbols in a start symbol in the end slot in the second time domain pattern, where K is a positive integer.

In some embodiments, the time domain resource of the SBFD subband corresponds to a reference SCS associated with a cell-specific uplink-downlink time division duplexing TDD configuration.

The reference SCS may be used to determine a time domain boundary of the SBFD subband.

In an implementation, when sending the first information to the terminal device, the transceiver unit 1201 may be configured to send a first RRC message to the terminal device, where the first RRC message includes the first information.

In an example, the transceiver unit 1201 may be further configured to receive first capability information from the terminal device, where the first capability information indicates that the terminal device supports SBFD.

It should be noted that, in this embodiment of this application, division into the units is an example, and is merely a logical function division. In practice, another division manner may be used. Functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of software product. The software product is stored in a storage medium and includes several instructions for instructing a computer device (which may be a personal computer, a server, a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 13, a communication apparatus 1300 may include one or more processors 1302. Optionally, the communication apparatus 1300 may further include a transceiver 1301. Optionally, the communication apparatus 1300 may further include at least one memory 1303. The memory 1303 may be disposed inside the communication apparatus 1300, or may be disposed outside the communication apparatus 1300. The processor 1302 may control the transceiver 1301 to receive and send information, a message, data, or the like.

Specifically, the processor 1302 may be a central processing unit (central processing unit, CPU), a network processor (network processor, NP), or a combination of the CPU and the NP. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The transceiver 1301, the processor 1302, and the memory 1303 are connected to each other. Optionally, the transceiver 1301, the processor 1302, and the memory 1303 are connected to each other through a bus 1304. The bus 1304 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 13, but this does not mean that there is only one bus or only one type of bus.

In an optional implementation, the memory 1303 is configured to store a program and the like. Specifically, the program may include program code, and the program code includes computer operation instructions. The memory 1303 may include a RAM, and may further include a non-volatile memory (non-volatile memory), for example, one or more magnetic disk memories. The processor 1302 executes an application stored in the memory 1303, to implement the foregoing functions, so as to implement functions of the communication apparatus 1300.

In an embodiment, when the communication apparatus 1300 implements functions of the terminal device in the foregoing method embodiments, the transceiver 1301 may implement receiving and sending operations performed by the terminal device in the foregoing method embodiments. The processor 1302 may implement an operation, other than the receiving and sending operations, performed by the terminal device in the foregoing method embodiments. For specific related descriptions, refer to the related descriptions in the foregoing method embodiments. Details are not described herein again.

In another embodiment, when the communication apparatus 1300 implements functions of the network device in the foregoing method embodiments, the transceiver 1301 may implement receiving and sending operations performed by the terminal device in the foregoing method embodiments. The processor 1302 may implement an operation, other than the receiving and sending operations, performed by the network device in the foregoing method embodiments. For specific related descriptions, refer to the related descriptions in the foregoing method embodiments. Details are not described herein again.

Based on the foregoing embodiments, an embodiment of this application provides a communication system. The communication system may include the terminal device, the network device, and/or the like in the foregoing embodiments.

An embodiment of this application further provides a computer-readable storage medium. The computer-readable storage medium is configured to store a computer program. When the computer program is executed by a computer, the computer may implement the communication method provided in the foregoing method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip or a chip system, including one or more processors. The one or more processors are coupled to at least one memory, and are configured to invoke a program in the memory, so that the chip or the chip system implements the communication method provided in the foregoing method embodiments.

An embodiment of this application further provides a chip or a chip system. The chip or the chip system is coupled to at least one memory, and the chip or the chip system is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application and equivalent technologies thereof.

## Claims

1. A communication method, comprising:
receiving subband full duplex SBFD configuration information from a network device, wherein the SBFD configuration information is used to configure a time domain resource and/or a frequency domain resource of an SBFD subband; and
determining, based on first information, that the SBFD configuration information takes effect, wherein the first information indicates that the SBFD configuration information takes effect.

2. The method according to claim 1, wherein receiving the SBFD configuration information from the network device comprises:
receiving a system information block SIB from the network device, wherein the SIB comprises the SBFD configuration information.

3. The method according to claim 1 or 2, wherein the method further comprises:
receiving a first RRC message from the network device, wherein the first RRC message comprises the first information; or
the first information comprises a predefined first rule, and the first rule comprises:
determining that the SBFD configuration information takes effect based on an RRC setup message, an RRC resume message, or an RRC reestablishment message from the network device;
determining that the SBFD configuration information takes effect based on a random access message 1;
determining that the SBFD configuration information takes effect based on a random access message 3; or
determining that the SBFD configuration information takes effect based on a random access message A.

4. The method according to claim 3, wherein the method further comprises:
sending first capability information to the network device, wherein the first capability information indicates that a terminal device supports SBFD.

5. A communication method, comprising:
sending subband full duplex SBFD configuration information to a terminal device, wherein the SBFD configuration information is used to configure a time domain resource and/or a frequency domain resource of an SBFD subband; and
sending first information to the terminal device, wherein the first information indicates that the SBFD configuration information takes effect.

6. The method according to claim 5, wherein sending the SBFD configuration information to the terminal device comprises:
sending a system information block SIB to the terminal device, wherein the SIB comprises the SBFD configuration information.

7. The method according to claim 5 or 6, wherein sending the first information to the terminal device comprises:
sending a first RRC message to the terminal device, wherein the first RRC message comprises the first information.

8. The method according to claim 7, wherein the method further comprises:
receiving first capability information from the terminal device, wherein the first capability information indicates that the terminal device supports SBFD.

9. The method according to any one of claims 1 to 8, wherein the SBFD configuration information comprises frequency domain resources of at least one group of SBFD subbands, frequency domain resources of each group of SBFD subbands in the frequency domain resources of the at least one group of SBFD subbands correspond to one subcarrier spacing SCS, a first group of SBFD subbands comprises a plurality of subbands, and the first group of SBFD subbands is any group of SBFD subbands in the at least one group of SBFD subbands.

10. The method according to claim 9, wherein a frequency domain resource of any subband comprised in the first group of SBFD subbands is comprised in a first carrier, the first carrier corresponds to the first group of SBFD subbands, and an SCS corresponding to frequency domain resources of the first group of SBFD subbands is the same as an SCS corresponding to the first carrier.

11. The method according to claim 9 or 10, wherein the method further comprises:
determining a valid resource based on an active bandwidth part BWP and frequency domain resources of a second group of SBFD subbands, wherein an SCS corresponding to the frequency domain resources of the second group of SBFD subbands is the same as an SCS of the active BWP, and the second group of SBFD subbands is one group of SBFD subbands in the at least one group of SBFD subbands.

12. The method according to any one of claims 1 to 11, wherein the SBFD configuration information comprises first indication information, the first indication information indicates a slot position of the SBFD subband in a first time domain pattern, and the first time domain pattern corresponds to a first period length.

13. The method according to claim 12, wherein that the first indication information indicates the slot position of the SBFD subband in the first time domain pattern comprises:
the first indication information indicates a start slot and a quantity of first consecutive slots of the SBFD subband in the first time domain pattern;
the first indication information indicates an end slot and a quantity of second consecutive slots of the SBFD subband in the first time domain pattern; or
the first indication information indicates a start slot and an end slot of the SBFD subband in the first time domain pattern.

14. The method according to claim 12 or 13, wherein the SBFD configuration information further comprises second indication information, and the second indication information indicates a symbol position of the SBFD subband in a slot in the first time domain pattern.

15. The method according to claim 14, wherein that the second indication information indicates the symbol position of the SBFD subband in the slot in the first time domain pattern comprises:
the second indication information indicates a start symbol in the start slot of the SBFD subband in the first time domain pattern, or last M consecutive symbols in the start slot in the first time domain pattern, wherein M is a positive integer; and/or
the second indication information indicates an end symbol in the end slot of the SBFD subband in the first time domain pattern, or first N consecutive symbols in the end slot in the first time domain pattern, wherein N is a positive integer.

16. The method according to any one of claims 12 to 15, wherein the SBFD configuration information further comprises third indication information, the third indication information indicates a slot position of the SBFD subband in a second time domain pattern, and the second time domain pattern corresponds to a second period length.

17. The method according to claim 16, wherein that the third indication information indicates the slot position of the SBFD subband in the second time domain pattern comprises:
the third indication information indicates a start slot and a quantity of third consecutive slots of the SBFD subband in the second time domain pattern;
the third indication information indicates an end slot and a quantity of fourth consecutive slots of the SBFD subband in the second time domain pattern; or
the third indication information indicates a start slot and an end slot of the SBFD subband in the second time domain pattern.

18. The method according to claim 16 or 17, wherein the SBFD configuration information further comprises fourth indication information, and the fourth indication information indicates a symbol position of the SBFD subband in a slot in the second time domain pattern.

19. The method according to claim 18, wherein that the fourth indication information indicates the symbol position of the SBFD subband in the slot in the second time domain pattern comprises:
the fourth indication information indicates a start symbol in the start slot of the SBFD subband in the second time domain pattern, or last P consecutive symbols in the start slot in the second time domain pattern, wherein P is a positive integer;
and/or
the fourth indication information indicates an end symbol in the end slot of the SBFD subband in the second time domain pattern, or first K consecutive symbols in the end slot in the second time domain pattern, wherein K is a positive integer.

20. The method according to any one of claims 1 to 11, wherein the time domain resource of the SBFD subband corresponds to a reference SCS associated with a cell-specific uplink-downlink time division duplexing TDD configuration.

21. The method according to claim 20, wherein the reference SCS is used to determine a time domain boundary of the SBFD subband.

22. A communication apparatus, comprising a module or a unit configured to perform the method according to any one of claims 1 to 4 and 9 to 21.

23. A communication apparatus, comprising a module or a unit configured to perform the method according to any one of claims 5 to 21.

24. A communication apparatus, comprising one or more processors, wherein the one or more processors are coupled to at least one memory; and
the one or more processors are configured to invoke computer instructions in the memory, to enable the communication apparatus to perform the method according to any one of claims 1 to 4 and 9 to 21.

25. A communication apparatus, comprising one or more processors, wherein the one or more processors are coupled to at least one memory; and
the one or more processors are configured to invoke computer instructions in the memory, to enable the communication apparatus to perform the method according to any one of claims 5 to 21.

26. A computer-readable storage medium, wherein the computer-readable storage medium stores computer-executable instructions, and when the computer-executable instructions are invoked by the computer, the method according to any one of claims 1 to 4 and 9 to 21 or the method according to any one of claims 5 to 21 is performed.

27. A computer program product, comprising instructions, wherein when the instructions are run on a computer, the method according to any one of claims 1 to 4 and 9 to 21, or the method according to any one of claims 5 to 21 is performed.

28. A chip or a chip system, wherein the chip or the chip system is coupled to at least one memory, and is configured to: read and execute program instructions stored in the memory, to implement the method according to any one of claims 1 to 4 and 9 to 21, or the method according to any one of claims 5 to 21.
